# EUROPEAN PATENT SPECIFICATION

(11) **EP 2 090 600 B1**
(45) Date of publication and mention of the grant of the patent: **07.03.2018**
(21) Application number: 07850071.7
(22) Date of filing: 04.12.2007
(51) Int. Cl.: C09D 183/04, C08F 2/44, C08J 3/28, C08G 77/20, C08K 3/22

(54) **ORGANIC-INORGANIC COMPOSITE BODY**
ORGANISCH-ANORGANISCHER VERBUNDKÖRPER
CORPS COMPOSITE ORGANIQUE-INORGANIQUE

(30) Priority: 05.12.2006 JP 2006328549; 30.03.2007 JP 2007093510
(43) Date of publication of application: 19.08.2009
(73) Proprietor: Nippon Soda Co., Ltd., Tokyo 100-8165 (JP)
(72) Inventor: KIMURA, Nobuo, Ichihara-shi Chiba 290-0045 (JP); SHIBATA, Hiromoto, Ichihara-shi Chiba 290-0045 (JP); HASEGAWA, Kazuki, Ichihara-shi Chiba 290-0045 (JP)
(74) Representative: D Young & Co LLP
(86) International application number: PCT/JP2007/073423
(87) International publication number: WO 2008/069217

(56) References cited:
- EP-A1- 1 174 470
- EP-A1- 1 849 835
- WO-A1-99/57375
- WO-A1-2006/088079
- JP-A- 61 043 665
- JP-A- 2005 272 702
- JP-A- 2007 332 262

## Description

### Technical Field

The present invention relates to an organic-inorganic composite body, and more specifically to an organic-inorganic composite body wherein the carbon content is made lower on the surface of the body than in the interior of the body by irradiation with light containing a wavelength of 350 nm or less.

### Background Art

Nowadays, a trifunctional silane is mainly used as a raw material for commercially available silane-based coating agents, and such a trifunctional silane allows for the formation of a polysiloxane having an adequate hardness and flexibility. However, no trifunctional silane coating provides sufficient hard coating properties. For this reason, mixing a tetrafunctional silane or a colloidal silica into a trifunctional silane compensates for the insufficient hard coating properties, but unfortunately a hard coating results in ease of cracking and poor adhesion.

Examples of silane-based coating agents include a stainproof film-forming composition containing a trifunctional alkoxysilane compound having an epoxy group (see Patent Document 1). In addition, silane-based coating agents containing a photocatalyst are also proposed, and the agents use a photo-acid generator, a cross-linking agent, a curing catalyst, or the like to cure films (for example, see Patent Documents 2 and 3). Moreover, a silane-based organic-inorganic composite gradient material having a component gradient structure where the content of a metallic compound in the material varies continuously in the depth direction from the surface of the material is also proposed (for example, see Patent Document 4).

The present inventors provided an organic-inorganic composite body having a very high hardness on the surface and an adequate hardness in the interior and on the back surface while having excellent adhesion to a substrate, by irradiating an organosilicon compound with ultraviolet light in the presence of a photosensitive compound (see Patent Document 5). However, further improvement was expected in adhesion to a substrate and moisture resistance.

On the other hand, as a hard coating film, it is known that an acrylate-based resin or the like is used as a UV-curable resin. For example, Patent Document 6 discloses a hard coating film containing a (meth)acrylic acid ester mixture (A), a photopolymerization initiator (B), an urethane oligomer containing an unsaturated ethylene group (C), a colloidal silica sol (D) and a diluent (E), and describes that the film obtained has good pencil hardness, curling, and adhesion to a substrate.

In addition, Patent Document 7 discloses the use of a curable composition containing (A) particles produced by binding an oxide particle of at least one element selected from the group consisting of silicon, aluminum, zirconium, titanium, zinc, germanium, indium, tin, antimony, and cerium with an organic compound containing a polymerizable unsaturated group, (B) a compound having an urethane bond and 2 or more polymerizable unsaturated groups in the molecule, and (C) a photopolymerization initiator, and describes that a coating (film) having excellent coatability and a high hardness and a high refractive index on the surface of various substrates as well as an excellent scratch resistance and an excellent adhesion of a substrate and a low-refractive index layer can be formed.

Moreover, Patent Document 8 discloses an ultraviolet-curable hard coating resin composition comprising a mixture of a hydrolysate of an organosilicon compound and fine particles of a metal oxide, (B) a polyfunctional acrylate or methacrylate, and (C) a photopolymerization initiator, and describes that bleeding of an antistatic to the surface, decreased transparency, decreased moisture resistance, and the like can be reduced in the practically acceptable range and that the functions as hard coating (e.g., scratch resistance, surface hardness, moisture resistance, solvent and chemical resistance) are satisfactory.

However, these hard coating films using an acrylate resin or the like are inferior in wear and abrasion resistance compared to inorganic films, so the hard coating films are improved by adding a metal oxide sol. For this reason, there were problems that while the hardness increases, the transparency and pliability decrease.

Patent Document 1: Japanese Laid-Open Patent Application No. 10-195417
Patent Document 2: Japanese Laid-Open Patent Application No. 2002-363494
Patent Document 3: Japanese Laid-Open Patent Application No. 2000-169755
Patent Document 4: Japanese Laid-Open Patent Application No. 2000-336281
Patent Document 5: International Publication No. WO2006/088079
Patent Document 6: Japanese Laid-Open Patent Application No. 2002-235018
Patent Document 7: Japanese Laid-Open Patent Application No. 2005-272702
Patent Document 8: Japanese Laid-Open Patent Application No. 2001-214092

### Disclosure of the Invention

### Object to be Solved by the Invention

An object of the present invention is to improve the adhesion to a substrate and moisture resistance of a film consisting of a polysiloxane-based organic-inorganic composite body wherein the hardness is higher on the surface of the composite body than in the interior of the composite body. Another object of the invention is to increase the hardness of a hard coating film consisting of an ultraviolet-curable resin without decreasing the transparency or flexibility thereof.

### Means for Solving the Objects

The present inventors have conducted extensive studies to solve the above objects, and found out that an organic-inorganic composite body having a very high hardness on the surface of the composite body while having an excellent adhesion to a substrate and an excellent moisture resistance can be produced by adding an ultraviolet-curable compound to a polysiloxane-based organic-inorganic composite body. The present invention has been thus completed.

More specifically, the present invention relates to
(1) an organic-inorganic composite body comprising:
   a) a condensate of an organosilicon compound represented by Formula (I)

      RₙSiX₄₋ₙ ... (I)

      (wherein R represents an organic group having a carbon atom directly bonded to Si; X represents a hydroxy group or a hydrolyzable group; n represents 1 or 2, with the proviso that when n is 2, each R may be the same or different, and when (4-n) is 2 or more, each X may be the same or different);
   b) at least one photosensitive compound sensitive to light having a wavelength of 350 nm or less selected from the group consisting of metal chelate compounds, metal-organic acid salt compounds, metal compounds having 2 or more hydroxy groups or hydrolyzable groups, hydrolysates thereof, and condensates thereof, and/or a compound derived from the photosensitive compound; and
   c) a cured product of an ultraviolet-curable compound selected from the group consisting of polyester(meth)acrylate, polyurethane(meth)acrylate and epoxy poly(meth)acrylate;
(2) the organic-inorganic composite body according to (1), wherein the content of the organosilicon compound where R in Formula (I) represents a group having a vinyl group, a group having an oxirane ring, a group having -NR'₂ (wherein R' represents a hydrogen atom, an alkyl group, or an aryl group, and each R' may be the same or different), or a group having -N=CR''₂ (wherein R'' represents a hydrogen atom or an alkyl group, and each R'' may be the same or different) is 20 to 100% by weight with respect to the total weight of the organosilicon compound;.

Further, the present invention relates to: (3) the organic-inorganic composite body according to any one of (1) and (2), wherein the metal chelate compound has a hydroxy group or a hydrolyzable group; (4) the organic-inorganic composite body according to any one of (1) to
(3), wherein the metal-organic acid salt compound has a hydroxy group or a hydrolyzable group; (5) the organic-inorganic composite body according to any one of (1) to
(4), wherein the hydrolysate and/or condensate of the metal compound having 2 or more hydroxy groups or hydrolyzable groups is a product of hydrolysis using 0.5 mol or more of water per 1 mol of metal compound having 2 or more hydroxy groups or hydrolyzable groups; (6) the organic-inorganic composite body according to any one of (1) to (5), wherein the hydrolysate and/or condensate of the metal chelate compound is a product of hydrolysis using 5 to 100 mol of water per 1 mol of metal chelate compound; (7) the organic-inorganic composite body according to any one of (1) to (6), wherein the hydrolysate and/or condensate of the metal-organic acid salt compound is a product of hydrolysis using 5 to 100 mol of water per 1 mol of metal-organic acid salt compound; (8) the organic-inorganic composite body according to any one of (1) to (7), wherein the metal is Ti, Al, Zr, or Sn.

Further, the present invention relates to: (9) an organic-inorganic composite body-forming composition comprising:
a) an organosilicon compound represented by Formula (I)

   RₙSiX₄₋ₙ ... (I)

   (wherein R represents an organic group having a carbon atom directly bonded to Si; X represents a hydroxy group or a hydrolyzable group; n represents 1 or 2, with the proviso that when n is 2, each R may be the same or different, and when (4-n) is 2 or more, each X may be the same or different), and/or a condensate thereof;
b) at least one photosensitive compound selected from the group consisting of metal chelate compounds, metal-organic salt acid compounds, metal compounds having 2 or more hydroxy groups or hydrolyzable groups, hydrolysates thereof, and condensates thereof;
c) an ultraviolet-curable compound selected from the group consisting of polyester(meth)acrylate, polyurethane(meth)acrylate and epoxy poly(meth)acrylate; and
d) a photopolymerization initiator;
(10) the organic-inorganic composite body-forming composition according to (9), wherein the content of the organosilicon compound where R in Formula (I) represents a group having a vinyl group, a group having an oxirane ring, a group having -NR'₂ (wherein R' represents a hydrogen atom, an alkyl group, or an aryl group, and each R' may be the same or different), or a group having -N=CR''₂ (wherein R'' represents a hydrogen atom or an alkyl group, and each R'' may be the same or different) is 20 to 100% by weight with respect to the total weight of the organosilicon compound; (11) the organic-inorganic composite body-forming composition according to any one of (9) and (10), wherein the metal is Ti, Al, Zr, or Sn; (12) the organic-inorganic composite body-forming composition according to any one of (9) to (11), wherein the content of the ultraviolet-curable compound is 2 to 98% by mass with respect to the total mass of the organosilicon compound and/or condensate thereof, the photosensitive compound, the ultraviolet-curable compound, and the photopolymerization initiator.

The film thickness value used herein when specifying the carbon content of the thin film is a value determined when sputter etching is performed during ESCA, and does not necessarily corresponds to the actual film thickness value. This is because the thickness of a film etched by sputter etching depends on the material of the film. The actual film thickness value is obtained by converting the etching rate for each film material.

ESCA used herein employed film thickness in terms of SiO₂ by using a thermally oxidized SiO₂ film as a standard sample. The standard sample is a thermally oxidized SiO₂ film formed on a silicon wafer. The etching rate was determined by ESCA while sputter etching the standard sample for which film thickness has been measured in advance with an ellipsometer.

As used herein, "the minimum carbon content from the film surface to a depth of 0.5 µm" refers to the minimum value of carbon content measurements for depth units from the film surface to the depth of 0.5 µm on a graph showing carbon content obtained by measuring the carbon content in the depth direction from the film surface by ESCA. A detailed description of the measurement method is as given in Examples.

In addition, the carbon content on the back surface of the film is a value when the carbon content value has become constant at a depth deeper than a depth from the film surface where the carbon content gradually increases, and may not necessarily be the value on the back surface. In most films according to the present invention, the carbon content is constant in the film thickness direction in the inner side of a depth deeper than a depth where the carbon content gradually increases, and is not different from the carbon content value on the back surface. In the Examples, as it was difficult to clearly specify the back surface of a film by sputter etching, this constant value was used for evaluation. This value is a value by ESCA in the thickness range between 50 nm and 2000 nm from the interface (point of concentration intersection) between the film and the substrate toward the surface.

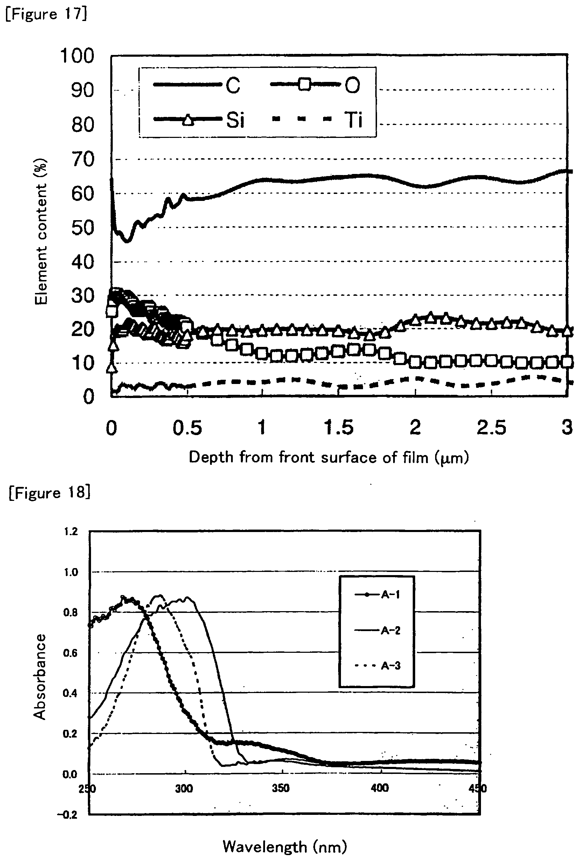

The mechanism by which the carbon content of the surface layer of the present invention is reduced by irradiation with light having a wavelength of 350 nm or less has not yet been well understood. As irradiation with light having a wavelength of 350 nm or less reduces the carbon content of the surface layer, the oxygen content increases, suggesting the occurrence of oxidation reaction. The occurrence of this reaction requires a photosensitive compound sensitive to light having a wavelength of 350 nm or less. The measurement of the absorbance of the compound alone clearly shows an absorbance peak at a wavelength of 350 nm or less (see Figure 18).

However, the addition of a photosensitive compound sensitive to light having a wavelength of 350 nm or less does not oxidize all organic groups. For example, common resins and the ultraviolet-curable resins according to the present invention are not oxidized by irradiation with ultraviolet light from a high-pressure mercury lamp with a photosensitive compound. In contrast, for titanium oxide photocatalysts that cause oxidation reaction by similar ultraviolet irradiation, all organic groups are oxidatively decomposed. Therefore, the present mechanism seems to differ from the mechanism for photocatalytic reaction.

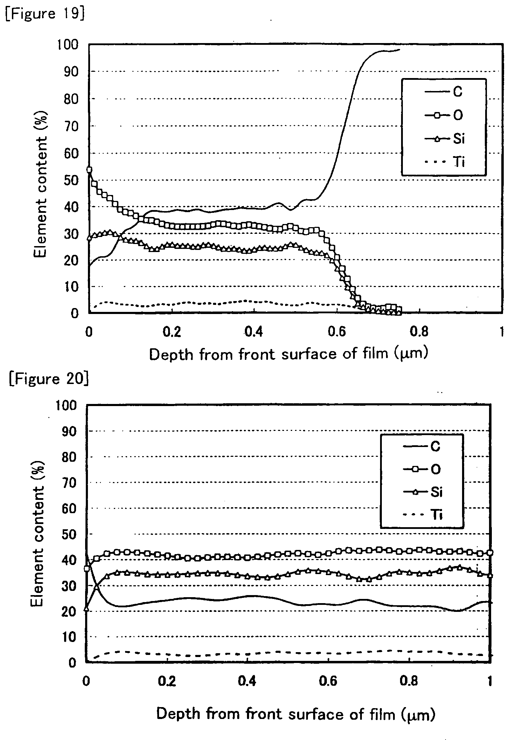

When a photosensitive compound according to the present invention is added, organic groups bonded to the organosilicon compound are oxidatively decomposed. However, not all of the organic groups are oxidatively decomposed. Especially, an organosilicon compound that has an organic group having a responsive site such as a vinyl group, a methacryloxypropyl group, a glycidoxypropyl group, or an amino group is oxidatively decomposed (see Figure 19).

On the other hand, an organosilicon compound that has an organic group having no reactive sites such as a methyl group, an ethyl group, a long-chain alkyl group, or a perfluoroalkyl group is not oxidatively decomposed even if a photosensitive compound is added (see Figure 20). In this case, when a sample irradiated at a more excess cumulative ultraviolet dose of 30 J/cm² is subjected to IR analysis with a Fourier transform infrared spectrometer (MAGNA-IR 760, Nicolet), the peak near 1,250 cm⁻¹ corresponding to a methyl group (Si-CH₃) does not decrease at all compared to the peak before ultraviolet irradiation.

However, mixing an organosilicon compound not oxidatively decomposed with an organosilicon compound oxidatively decomposed can increase the affinity for a resin with which a composite is formed, cause phase separation, and increase water repellency and oil repellency and various functions, so it may be preferred to allow the organosilicon compound not oxidatively decomposed to coexist with the organosilicon compound oxidatively decomposed.

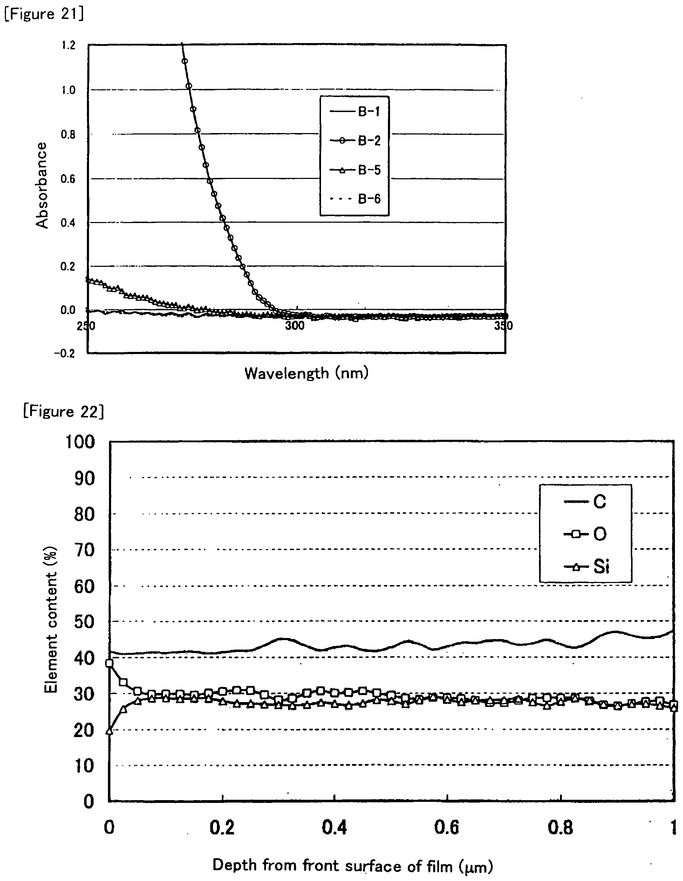

Moreover, no oxidative decomposition is caused by irradiating ultraviolet to an organosilicon compound in the absence of a photosensitive compound. The absorbance of the organosilicon compound is shown in Figure 21. There exist also silane compounds absorbing light having a wavelength of 350 nm or less (see B-2 and B-5 in Figure 21). However, irradiation with ultraviolet light (254 nm to 400 nm) from a high-pressure mercury lamp in the absence of a photosensitive compound causes no decrease in the amount of carbon on the surface of the film due to oxidation reaction (see Figure 22). This shows that no oxidative decomposition of an organosilicon compound occurs without adding a photosensitive compound.

It is inferred from these phenomena that for oxidative decomposition due to ultraviolet irradiation, the light energy absorbed by the photosensitive compound moves to reactive sites of the organosilicon compound and produces some high-energy state (instantaneous high-temperature state), causing oxidative decomposition of the organosilicon compound. As sites to be oxidized, especially, only sites that are originally easy to oxidize such as a vinyl group are selectively oxidized.

Naturally, double-bonded sites such as a vinyl group and other polymerizable sites are present not only in the organosilicon compound but also in an ultraviolet-curable resin, and the resin may be oxidatively decomposed by the photosensitive compound. However, for a composite body of an organosilicon compound according to the present invention and an ultraviolet-curable resin, the polymerization reaction of the ultraviolet-curable resin is completed before the compound is oxidatively decomposed, because the ultraviolet-curable resin requires an ultraviolet dose of 300 mJ/cm² or less to cure, which differs from an dose of 1000 mJ/cm² or more required for oxidative decomposition. In short, the ultraviolet-curable resin is not easily oxidatively decomposed, and the dose required for curing does not inhibit the curing of the ultraviolet-curable resin due to oxidative reaction. In addition, many photopolymerization initiators are usually designed to effectively use light having a wavelength of 365 nm which is most emitted by a lamp such as a high-pressure mercury lamp, and this also suggests that the rate of curing an ultraviolet-curable resin is much higher than the rate of the oxidation reaction of the organosilicon compound.

Specifically, in case of a composite body of an organosilicon compound according to the present invention and an ultraviolet-curable resin, the wavelengths of light used for respective reactions are different from each other, and the reaction rates are also different. Therefore, ultraviolet irradiation allows the curing reaction of the ultraviolet-curable resin and the oxidative decomposition reaction of the organosilicon compound (surface oxidation and curing reactions) to proceed in two stages.

This means that a composite system of an organosilicon compound and an ultraviolet-curable resin combines the good properties of both. Moreover, the formation of a composite system greatly increases the pencil hardness, sometimes showing better effect than a simple additive effect on improving properties. For example, an ultraviolet-curable resin with a pencil hardness of 4H alone, added with 10% of a combination of an organosilicon compound and a TiO₂ photosensitive compound may achieve a pencil hardness of 8H, which is an unpredictable effect.

Because of the proceeding of curing in two stages as mentioned above, ultraviolet-curable resins selected from the group consisting of polyester(meth)acrylate, polyurethane(meth)acrylate and epoxy poly(meth)acrylate with which a composite body is formed can be used without inhibiting curing. The Examples use urethane acrylate and epoxy acrylate, each of which provides an effect associated with the formation of a composite body.

In addition, in case of a composite system, a mineralized surface (a SiO₂ layer) is formed, and not only the mechanical characteristics such as abrasion and wear resistance are enhanced but also, for example, it is possible to increase printing compatibility and adhesion and provide a hydrophilic surface or confer water repellency or oil repellency by silane coupling treatment.

### Brief Description of Drawings

[Figure 1] Figure 1 is a graph showing the distributions of film components of the thin film of Example 1 in the direction of film thickness as measured by ESCA.
[Figure 2] Figure 2 is a graph showing the distributions of film components of the thin film of Example 3 in the direction of film thickness as measured by ESCA.
[Figure 3] Figure 3 is a graph showing the distributions of film components of the thin film of Example 4 in the direction of film thickness as measured by ESCA.
[Figure 4] Figure 4 is a graph showing the distributions of film components of the thin film of Comparative Example 1 in the direction of film thickness as measured by ESCA.
[Figure 5] Figure 5 is a graph showing the distributions of film components of the thin film of Comparative Example 2 in the direction of film thickness as measured by ESCA.
[Figure 6] Figure 6 is a graph showing the distributions of film components of the thin film of Example 3' before UV irradiation in the direction of film thickness as measured by ESCA.
[Figure 7] Figure 7 is a graph showing the distributions of film components of the thin film of Example 3' after UV irradiation in the direction of film thickness as measured by ESCA.
[Figure 8] Figure 8 is a graph showing the distributions of film components of the thin film of Example 8' after UV irradiation in the direction of film thickness as measured by ESCA.
[Figure 9] Figure 9 is a graph showing the distributions of film components of the thin film of Example 9' before UV irradiation in the direction of film thickness as measured by ESCA.
[Figure 10] Figure 10 is a graph showing the distributions of film components of the thin film of Example 9' after UV irradiation in the direction of film thickness as measured by ESCA.
[Figure 11] Figure 11 is a graph showing the results of measurements of the water contact angles on the surface of the thin films of Examples 4 and 8 and Comparative Example 1 immediately after UV/ozone cleaning. D-1 represents the thin film of Comparative Example 1, E-4 represents the thin film of Example 4, and E-8 represents the thin film of Example 8.
[Figure 12] Figure 12 is a graph showing the distributions of film components of the thin film of Example 10 in the direction of film thickness as measured by ESCA.
[Figure 13] Figure 13 is a graph showing the distributions of film components of the thin film of Example 11 in the direction of film thickness as measured by ESCA.
[Figure 14] Figure 14 is a graph showing the distributions of film components of the thin film of Example 12 in the direction of film thickness as measured by ESCA.
[Figure 15] Figure 15 is a graph showing the distributions of film components of the thin film of Example 13 in the direction of film thickness as measured by ESCA.
[Figure 16] Figure 16 is a graph showing the distributions of film components of the thin film of Example 14 in the direction of film thickness as measured by ESCA.
[Figure 17] Figure 17 is a graph showing the distributions of film components of the thin film of Example 15 in the direction of film thickness as measured by ESCA.
[Figure 18] Figure 18 is a graph showing an absorbance distribution of the photosensitive compound of Reference Example 1 in the ultraviolet region as measured with a spectrophotometer.
[Figure 19] Figure 19 is a graph showing the distributions of film components of the thin film of Reference Example 2 in the direction of film thickness as measured by ESCA (where a decrease in carbon of the surface layer is clearly noted).
[Figure 20] Figure 20 is a graph showing the distributions of film components of the thin film of Reference Example 3 in the direction of film thickness as measured by ESCA (where the increase in carbon on the surface is due to dirt).
[Figure 21] Figure 21 is a graph showing an absorbance distribution of the organic silane compound of Reference Example 4 in the ultraviolet region as measured with a spectrophotometer (where the B-1 and B-6 curves overlap near 0 because of no absorption).
[Figure 22] Figure 22 is a graph showing the distributions of film components of the thin film of Reference Example 5 in the direction of film thickness as measured by ESCA.
[Figure 23] Figure 23 is a graph showing the distributions of film components of the thin film of Reference Example 6 in the direction of film thickness as measured by ESCA.
[Figure 24] Figure 24 is a graph showing the distributions of film components of the thin film of Reference Example 7 in the direction of film thickness as measured by ESCA. (In Figures 22 to 24, it is inferred that the increase of oxygen and decrease of silicon on the surface are due to production of silanols without formation of a siloxane bond).

### Best Mode of Carrying Out the Invention

### (Organic-inorganic composite body)

The organic-inorganic composite body according to the present invention mainly contains
a) a condensate of an organosilicon compound represented by Formula (I)

   RₙSiX₄₋ₙ ... (I)

   (wherein R represents an organic group having a carbon atom directly bonded to Si; X represents a hydroxy group or a hydrolyzable group; n represents 1 or 2, with the proviso that when n is 2, each R may be the same or different, and when (4-n) is 2 or more, each X may be the same or different) (hereinafter may simply be referred to as an organosilicon compound) as a main component; and further contains
b) at least one photosensitive compound sensitive to light having a wavelength of 350 nm or less selected from the group consisting of metal chelate compounds, metal-organic acid salt compounds, metal compounds having 2 or more hydroxy groups or hydrolyzable groups, hydrolysates thereof, and condensates thereof; and/or a compound derived from the photosensitive compound; and
c) a cured product of an ultraviolet-curable compound selected from the group consisting of polyester(meth)acrylate, polyurethane(meth)acrylate and epoxy poly(meth)acrylate. The organic-inorganic composite bodies according to the present invention encompass a composite body wherein a photosensitive compound and/or a derivative thereof are dispersed in a nonbonded state in a condensate of the organosilicon compound; a composite body wherein a photosensitive compound and/or a derivative thereof combine are bound to a condensate of the organosilicon compound, for example, those having an Si-O-M bond (wherein M represents a metal atom in the photosensitive compound); and a mixture thereof.

### (Organosilicon compound)

In Formula (I) for the organosilicon compound according to the present invention, R and X each are defined as follows:
R represents an organic group having a carbon atom directly bonded to Si. Examples of such an organic group include a hydrocarbon group that may be substituted, and a group consisting of a polymer of hydrocarbon that may be substituted. The organic group may be a hydrocarbon group having 1 to 30 carbon atoms that may be substituted. A linear or branched alkyl group having 1 to 10 carbon atoms that may be substituted, a cycloalkyl group having 3 to 8 carbon atoms that may be substituted, a linear or branched alkenyl group having 2 to 10 carbon atoms that may be substituted, or a cycloalkenyl group having 3 to 8 carbon atoms that may be substituted are preferred, and organic groups represented by R may have an aromatic ring.

In addition, such organic groups may contain an oxygen atom, a nitrogen atom, or silicon atom, and may be groups containing a polymer such as polysiloxane, polyvinylsilane, or polyacrylsilane. Examples of substituents include halogens and a methacryloxy group, and examples of the halogens include a fluorine atom, a chlorine atom, a bromine atom, and an iodine atom.

As an alkyl group having 1 to 10 carbon atoms, there is a linear or branched alkyl group having 1 to 10 carbon atoms, and examples thereof include a methyl group, an ethyl group, an n-propyl group, an isopropyl group, an n-butyl group, an isobutyl group, a t-butyl group, an n-pentyl group, an isopentyl group, a neopentyl group, a 2-methylbutyl group, a 2,2-dimethylpropyl group, an n-hexyl group, an isohexyl group, an n-heptyl group, an n-octyl group, a nonyl group, an isononyl group, and a decyl group. Examples of an long-chain alkyl group having more than 10 carbon atoms include a lauryl group, a tridecyl group, a myristyl group, a pentadecyl group, a palmityl group, a heptadecyl group, and a stearyl group.

Examples of the cycloalkyl group having 3 to 8 carbon atoms include a cyclopropyl group, a cyclobutyl group, a cyclopentyl group, a cyclohexyl group, a cycloheptyl group, and a cyclooctyl group.

The linear or branched alkenyl group having 2 to 10 carbon atoms refers to a linear or branched alkenyl group having 2 to 10 carbon atoms that has a carbon-carbon double bond at one or more sites. Examples thereof include an ethenyl group, a prop-1-en-1-yl group, a prop-2-en-1-yl group, a prop-1-en-2-yl group, a but-1-en-1-yl group, a but-2-en-1-yl group, a but-3-en-1-yl group, a but-1-en-2-yl group, a but-3-en-2-yl group, a pent-1-en-1-yl group, a pent-4-en-1-yl group, a pent-1-en-2-yl group, a pent-4-en-2-yl group, a 3-methyl-but-1-en-1-yl group, a hex-1-en-1-yl group, a hex-5-en-1-yl group, a hept-1-en-1-yl group, a hept-6-en-1-yl group, an oct-1-en-1-yl group, and an oct-7-en-1-yl group.

The cycloalkenyl group having 3 to 8 carbon atoms refers to an alkenyl group having 3 to 8 carbon atoms that has a carbon-carbon double bond at one or more sites and having a cyclic moiety. Examples thereof include a 1-cyclopentene-1-yl group, a 2-cyclopentene-1-yl group, a 1-cyclohexene-1-yl group, a 2-cyclohexene-1-yl group, and a 3-cyclohexene-1-yl group.

Examples of an organic group having an aromatic ring, for example as C₆₋₁₀ aryl C₁₋₈ alkyl groups, include a benzyl group, a phenethyl group, a 3-phenyl-n-propyl group, a 4-phenyl-n-butyl group, a 5-phenyl-n-pentyl group, an 8-phenyl-n-octyl group, and a naphthylmethyl group. In addition, examples as C₆₋₁₀ aryl C₂₋₆ alkenyl groups include a styryl group, a 3-phenyl-prop-1-en-1-yl group, a 3-phenyl-prop-2-en-1-yl group, a 4-phenyl-but-1-en-1-yl group, a 4-phenyl-but-3-en-1-yl group, a 5-phenyl-pent-1-en-1-yl group, a 5-phenyl-pent-4-en-1-yl group, an 8-phenyl-oct-1-en-1-yl group, an 8-phenyl-oct-7-en-1-yl group, and a naphthylethenyl group.

Examples of a group having an oxygen atom include a group having an oxirane ring (epoxy group) such as an epoxy group, an epoxyalkyl group, and a glycidoxypropyl group, an acryloxymethyl group, and a methacryloxymethyl group.

Among groups having an oxygen atom, as an epoxy alkyl group, a linear or branched epoxyalkyl group having 3 to 10 carbon atoms is preferred. Examples thereof include an epoxymethyl group, an epoxyethyl group, an epoxy-n-propyl group, an epoxyisopropyl group, an epoxy-n-butyl group, an epoxyisobutyl group, an epoxy-t-butyl group, an epoxy-n-pentyl group, an epoxyisopentyl group, an epoxyneopentyl group, an epoxy-2-methylbutyl group, an epoxy-2,2-dimethylpropyl group, and an epoxy-n-hexyl group. Examples of a group further having an oxygen atom in addition to an oxirane ring include a glycidoxypropyl group.

As a group having a nitrogen atom, a group having -NR'₂ (wherein R' represents a hydrogen atom, an alkyl group, or an aryl group, and each R' may be the same or different), or a group having -N=CR''₂ (wherein R'' represents a hydrogen atom or an alkyl group, and each R'' may be the same or different) is preferred. Examples of the alkyl group are the same as above, and examples of the aryl group include a phenyl group, a naphthyl group, an anthracen-1-yl group, and a phenanthren-1-yl group.

Examples of the group having -NR'₂ include a -CH₂-NH₂ group, a -C₃H₆-NH₂ group, and a -CH₃-NH-CH₃ group. Examples of the group having -N=CR''₂ include a -CH₂-N=CH-CH₃ group, a -CH₂-N=C(CH₃)₂ group, and a -C₂H₅-N=CH-CH₃ group.

Of the groups above, examples of groups decomposed by irradiation with light having a wavelength of 350 nm or less include a group having a vinyl group, a group having an oxirane ring, a group having -NR'₂ (wherein R'' represents a hydrogen atom, an alkyl group, or an aryl group, and each R' may be the same or different), or a group having -N=CR''₂ (wherein R'' represents a hydrogen atom or an alkyl group, and each R'' may be the same or different).

Here, examples of the group having a vinyl group include a group having a group having an alkenyl group such as an ethenyl group (vinyl group), a prop-2-en-1-yl group, a but-3-en-1-yl group, a pent-4-en-1-yl group, a hex-5-en-1-yl group, a hept-6-en-1-yl group, or an oct-7-en-1-yl group; or a vinylcarbonyl group such as a methyl methacrylate group, an acryloxymethyl group, or a methacryloxymethyl group. Examples of the group having an oxirane ring, the group having -NR'₂, and the group having -N=CR''₂ are the same as above.

In addition, in Formula (I) of the organosilicon compound, n represents 1 or 2, and an organosilicon compound having n = 1 is particularly preferred. When n is 2, each R may be the same or different. In addition, these can be used alone or in combination of two or more.

X represents a hydroxy group or a hydrolyzable group. When (4-n) in Formula (I) is 2 or more, each X may be the same or different. The hydrolyzable group refers to a group that can be hydrolyzed and produce a silanol group or form a siloxane condensate, for example, when the group is heated at 25°C to 100°C with no catalyst and in the copresence of excess water. Examples thereof include an alkoxy group, an acyloxy group, a halogen group, and an isocyanate group, and an alkoxy group having 1 to 4 carbon atoms or an acyloxy group having 1 to 6 carbon atoms is preferred.

Examples of the alkoxy group having 1 to 4 carbon atoms include a methyloxy group, an ethyloxy group, a propyloxy group, an isopropyloxy group, an n-butyloxy group, an isobutyloxy group, and a t-butyloxy group. Examples of the acyloxy group having 1 to 6 carbon atoms include an acetyloxy group and a benzoyloxy group. Examples of the halogens include a fluorine atom, a chlorine atom, a bromine atom, and an iodine atom. Examples of the isocyanate group include an isocyanate group bonded to an alkyl group, an isocyanate group bonded to a cycloalkyl group, an isocyanate group bonded to an aryl group, an isocyanate group bonded to an alkyl group substituted with a cycloalkyl group, and an isocyanate group bonded to an alkyl group substituted with an aryl group.

Examples of the organosilicon compound include methyltrichlorosilane, methyltrimethoxysilane, methyltriethoxysilane, methyltributoxysilane, ethyltrimethoxysilane, ethyltriisopropoxysilane, ethyltributoxysilane, butyltrimethoxysilane, pentafluorophenyltrimethoxysilane, phenyltrimethoxysilane, nonafluorobutylethyldimethoxysilane, trifluoromethyltrimethoxysilane, dimethyldiaminosilane, dimethyldichlorosilane, dimethyldiacetoxysilane, dimethyldimethoxysilane, diphenyldimethoxysilane, dibutyldimethoxysilane, vinyltrimethoxysilane, (meth)acryloxypropyltrimethoxysilane, 3-(3-methyl-3-oxetanemethoxy)propyltrimethoxysilane, oxacyclohexyltrimethoxysilane, methyltri(meth)acryloxysilane, methyl[2-(meth)acryloxyethoxy]silane, methyl-triglycidyloxysilane, methyltris(3-methyl-3-oxetanemethoxy)silane, vinyltrichlorosilane, vinyltriethoxysilane, 2-(3,4-epoxycyclohexyl)ethyltrimethoxysilane, 3-glycidoxypropyltrimethoxysilane, 3-glycidoxypropylmethyldiethoxysilane, 3-glycidoxypropyltriethoxysilane, p-styryltrimethoxysilane, 3-methacryloxypropylmethyldimethoxysilane, 3-methacryloxypropyltrimethoxysilane, 3-methacryloxypropylmethyldiethoxysilane, 3-methacryloxypropyltriethoxysilane, 3-acryloxypropyltrimethoxysilane, N-2-(aminoethyl)-3-aminopropylmethyldimethoxysilane, N-2-(aminoethyl)-3-aminopropyltrimethoxysilane, N-2-(aminoethyl)-3-aminopropyltriethoxysilane, 3-aminopropyltrimethoxysilane, 3-aminopropyltriethoxysilane, 3-triethoxysilyl-N-(1,3-dimethyl-butylidene)propylamine, and N-phenyl-3-aminopropyltrimethoxysilane. These can be used alone or in combination of two or more.

In addition, examples of the organosilicon compound having a group comprising a hydrocarbon polymer include ester(meth)acrylates such as methyl (meth)acrylate, ethyl (meth)acrylate, butyl (meth)acrylate, 2-ethylhexyl (meth)acrylate, and cyclohexyl (meth)acrylate; carboxylic acids such as (meth)acrylic acid, itaconic acid, and fumaric acid and acid anhydrides such as maleic anhydride; epoxy compounds such as glycidyl (meth)acrylate; amino compounds such as diethylaminoethyl (meth)acrylate and aminoethyl vinyl ether; amide compounds such as (meth)acrylamide, itaconic diamide, α-ethylacrylamide, crotonamide, fumaric diamide, maleic diamide, and N-butoxymethyl(meth)acrylamide; and those using a vinyl polymer produced by copolymerizing a vinyl compound selected from acrylonitrile, styrene, α-methylstyrene, vinyl chloride, vinyl acetate, vinyl propionate, and the like as the R component in Formula (I).

However, a condensate of an organosilicon compound to be the main component in the organic-inorganic composite body according to the present invention refers to a product formed by further condensing the organosilicon compound and/or a condensate thereof in a method for producing the organic-inorganic composition of the present invention, and an organic-inorganic composite body-forming composition, as described in the following.

### (Photosensitive compound)

The photosensitive compound according to the present invention refers to a compound that can remove the carbon component on the surface side by the action of light having a wavelength of 350 nm or less irradiated from the surface side, regardless of the mechanism. It is preferably a compound whose minimum carbon content in the distance from the film surface to a depth of 0.5 µm can be set to 80% or less of the carbon content on the back surface of the film, more preferably 2 to 60%, and further preferably 2 to 40%. The photosensitive compound according to the present invention is particularly preferably a compound whose carbon component can be removed to a specified depth so that the amount of removal gradually decreases from the surface side, in other words, a compound that can produce a film whose carbon content gradually increases to a specified depth from the surface side. Examples of such a compound include a compound that becomes excited when it absorbs light having a wavelength of 350 nm or less.

Here, the light having a wavelength of 350 nm or less refers to light emitted from a light source using light having a wavelength of 350 nm or less as a component, preferably light emitted from a light source using light having a wavelength of 350 nm or less as the main component, in other words, light emitted from a light source using light whose most abundant wavelength is 350 nm or less.

The photosensitive compound in the organic-inorganic composite body according to the present invention is at least one compound selected from the group consisting of metal chelate compounds, metal-organic salt acid compounds, metal compounds having 2 or more hydroxy groups or hydrolyzable groups, hydrolysates thereof, and condensates thereof, and is preferably a hydrolysate and/or a condensate, and particularly preferably a hydrolysate and/or a condensate of a metal chelate compound. Examples of a compound derived therefrom include a product obtained by further condensing a condensate or the like of a metal chelate compound. Such a photosensitive compound and/or a derivative thereof may be chemically bonded to an organosilicon compound, as mentioned above, be dispersed in a nonbonded state, or be in a mixed state thereof.

The metal chelate compound is preferably a metal chelate compound having a hydroxy group or a hydrolyzable group, and more preferably a metal chelate compound having 2 or more hydroxy groups or hydrolyzable groups. Here, "having 2 or more hydroxy groups or hydrolyzable groups" means that the total number of hydrolyzable groups and hydroxy groups is 2 or more. In addition, the metal chelate compound is preferably a β-ketocarbonyl compound, a β-ketoester compound, or an α-hydroxyester compound, and examples thereof include compounds that coordinate with β-ketoesters such as methyl acetoacetate, n-propyl acetoacetate, isopropyl acetoacetate, n-butyl acetoacetate, sec-butyl acetoacetate, and t-butyl acetoacetate; β-diketones such as acetylacetone, hexane-2,4-dione, heptane-2,4-dione, heptane-3,5-dione, octane-2,4-dione, nonane-2,4-dione, and 5-methyl-hexane-2,4-dione; hydroxycarboxylic acids such as glycolic acid and lactic acid; or the like.

The metal-organic acid salt compound is a compound composed of a metal ion and a salt obtained from an organic acid, and examples of the organic acid include acidic organic compounds including carboxylic acids such as acetic acid, oxalic acid, tartaric acid, and benzoic acid; sulfur-containing organic acids such as sulfonic acid, sulfinic acid, and thiophenol; phenolic compounds; enol compounds; oxime compounds; imide compounds; and aromatic sulfonamides.

In addition, the metal compound having 2 or more hydroxy groups or hydrolyzable groups excludes the above mentioned metal chelate compounds and metal-organic acid salt compounds, and examples thereof include metal hydroxides and metal alcoholates.

Examples of the hydrolyzable group in a metal compound, a metal chelate compound, or a metal-organic acid salt compound include an alkoxy group, an acyloxy group, a halogen group, and an isocyanate group, and an alkoxy group having 1 to 4 carbon atoms and an acyloxy group having 1 to 4 carbon atoms are preferred. Here, "having 2 or more hydroxy groups or hydrolyzable groups" means that the total number of hydrolyzable groups and hydroxy groups is 2 or more.

The hydrolysate and/or condensate of such a metal compound is preferably a product obtained by hydrolyzing using 0.5 mol or more of water, more preferably with 0.5 to 2 mol of water per 1 mol of the metal compound having 2 or more hydroxy groups or hydrolyzable group.

In addition, the hydrolysate and/or condensate of such a metal chelate compound is preferably a product obtained by hydrolyzing with 5 to 100 mol of water, more preferably with 5 to 20 mol of water per 1 mol of the metal chelate compound.

In addition, the hydrolysate and/or condensate of such a metal-organic acid salt compound is preferably a product obtained by hydrolyzing with 5 to 100 mol of water, more preferably 5 to 20 mol of water per 1 mol of the metal-organic acid salt compound.

In addition, examples of a metal in such a metal compound, metal chelate compound, or metal-organic acid salt compound include titanium, zirconium, aluminum, silicon, germanium, indium, tin, tantalum, zinc, tungsten, and lead, and among these, titanium, zirconium, aluminum, and tin are preferable, and titanium is particularly preferred. These can be used alone or in combination of two or more.

### (Ultraviolet-curable compound)

The ultraviolet-curable compound according to the present invention refers to a compound or resin having a functional group that causes polymerization reaction induced by ultraviolet irradiation in the presence of a photopolymerization initiator, and said compound is selected from the group consisting of polyester(meth)acrylate, polyurethane(meth)acrylate and epoxy poly(meth)acrylate. The number of functional groups is not particularly limited as long as it is one or more.

### Polyurethane (meth)acrylate is more preferred.

The molecular weight of the acrylate compound is not limited as long as the compound can be dissolved in an organic-inorganic composite body-forming composition, and the mass-average molecular weight is usually 500 to 50,000, and preferably 1,000 to 10,000.

In addition, the cured product is a polymer generated from polymerization reaction induced by ultraviolet irradiation.

Epoxy (meth)acrylate can be obtained, for example, by the esterification reaction between an oxirane ring of a low-molecular-weight bisphenol epoxy resin or a novolac epoxy resin and an acrylic acid.

Polyester (meth)acrylate can be obtained, for example, by esterification of hydroxy groups of a polyester oligomer having the hydroxy groups at both ends, obtained by the condensation of a polyvalent carboxylic acid and a polyol, with acrylic acid. Alternatively, it can be obtained by esterification of hydroxy groups at the ends of an oligomer obtained by adding alkylene oxide to a polyvalent carboxylic acid, with acrylic acid.

Urethane (meth)acrylate is a product of the reaction between an isocyanate compound obtained by reacting a polyol with a diisocyanate and an acrylate monomer having a hydroxy group, and examples of the polyol include polyester polyol, polyether polyol, and polycarbonate diol.

Commercial available products of the urethane(meth)acrylate used in the present invention include products marketed as BEAM SET 102, 502H, 505A-6, 510, 550B, 551B, 575, 575CB, EM-90, and EM92 from Arakawa Chemical Industries, Ltd.; products marketed as Photomer 6008, and 6210 from San Nopco Limited; products marketed as NK Oligo U-2PPA, U-4HA, U-6HA, H-15HA, UA-32PA, U-324A, U-4H, and U-6H from Shin-Nakamura Chemical Co., Ltd.; products marketed as Aronix M-1100, M-1200, M-1210, M-1310, M-1600, and M-1960 from Toagosei Co., Ltd.; products marketed as AH-600, AT606, and UA-306H from Kyoeisha Chemical Co., Ltd.; products marketed as KAYARAD UX-2201, UX-2301, UX-3204, UX-3301, UX-4101, UX-6101, and UX-7101 from Nippon Kayaku Co., Ltd.; products marketed as SHIKOH UV-1700B, UV-3000B, UV-6100B, UV-6300B, UV-7000, UV-7600B, and UV-2010B from The Nippon Synthetic Chemical Industry Co., Ltd.; products marketed as Art Resin UN-1255, UN-5200, HDP-4T, HMP-2, UN-901T, UN-3320HA, UN-3320HB, UN-3320HC, UN-3320HS, H-61, and HDP-M20 from Negami Chemical Industrial Co., Ltd.; and products marketed as Ebecryl 6700, 204, 205, 220, 254, 1259, 1290K, 1748, 2002, 2220, 4833, 4842, 4866, 5129, 6602, and 8301 from DAICEL-UCB Co., Ltd.

### (Photopolymerization initiator)

Examples of the photopolymerization initiator according to the present invention include (a) a compound that can produce a cationic species by light irradiation and (b) a compound that can produce an active radical species by light irradiation.

Preferable examples of the compounds that can produce a cationic species by light irradiation include an onium salt having a structure represented by the following Formula (II).

This onium salt is a compound that releases a Lewis acid when it is subjected to light.

[R¹ₐR²_{b}R³_{c}R⁴_{d}W]^{+e}[ML_{e+f}]^{-e} (II)

(wherein the cation is an onium ion; W represents S, Se, Te, P, As, Sb, Bi, 0, I, Br, Cl, or N=N-, and R¹, R², R³, and R⁴ each represent the same or a different organic group; a, b, c, and d each represent an integer of 0 to 3, where the sum (a + b + c + d) is equal to the valence of W; M represents a metal constituting a central atom of a halide complex [ML_{e+f}] or metalloid, and for example, represents B, P, As, Sb, Fe, Sn, Bi, Al, Ca, In, Ti, Zn, Sc, V, Cr, Mn, or Co; L represents a halogen atom such as F, Cl, or Br; e represents the net charge of a halide complex ion; and f represents the valence of M).

Examples of the anion (ML_{e+f}) in Formula (II) include tetrafluoroborate (BF₄⁻), hexafluorophosphate (PF₆⁻), hexafluoroantimonate (SbF₆⁻), hexafluoroarsenate (AsF₆⁻), and hexachloroantimonate (SbCl₆⁻).

In addition, an onium salt having an anion represented in Formula [ML_{f}(OH)⁻] can also be used. Moreover, an onium salt having other anions such as a perchlorate ion (Clo₄⁻), a trifluoromethanesulfonate ion (CF₃SO₃⁻), a fluorosulfonate ion (FSO₃⁻), toluenesulfonate ion, a trinitrobenzenesulfonate anion, and a trinitrotoluenesulfonate anion may be used. These may be used alone or in combination of two or more.

Examples of the compounds that can produce an active radical species by light irradiation include acetophenone, acetophenone benzyl ketal, 1-hydroxycyclohexyl phenyl ketone, 2,2-dimethoxy-1,2-diphenylethan-1-one, xanthone, fluorenone, benzaldehyde, fluorene, anthraquinone, triphenylamine, carbazole, 3-methylacetophenone, 4-chlorobenzophenone, 4,4'-dimethoxybenzophenone, 4,4'-diaminobenzophenone, benzoin propyl ether, benzoin ethyl ether, benzyl dimethyl ketal, 1-(4-isopropylphenyl)-2-hydroxy-2-methylpropan-1-one, 2-hydroxy-2-methyl-1-phenylpropan-1-one, thioxanthone, diethylthioxanthone, 2-isopropylthioxanthone, 2-chlorothioxanthone, 2-methyl-1-[4-(methylthio)phenyl]-2-morpholino-propan-1-one, 2-benzyl-2-dimethylamino-1-(4-morpholinophenyl)-butanone-1,4-(2-hydroxyethoxy)phenyl-(2-hydroxy-2-propyl) ketone, 2,4,6-trimethylbenzoyldiphenylphosphine oxide, bis(2,6-dimethoxybenzoyl)-2,4,4-trimethylpentylphosphine oxide, and oligo(2-hydroxy-2-methyl-1-(4-(1-methylvinyl)phenyl)propanone).

The content of the photopolymerization initiator used in the present invention is preferably 0.01 to 20% by weight, and more preferably 0.1 to 10% by weight, with respect to the solid content of a (meth)acrylate ultraviolet-curable compound.

However, in the present invention, a sensitizer can be added as needed. For example, trimethylamine, methyldimethanolamine, triethanolamine, p-dimethylaminoacetophenone, ethyl p-dimethylaminobenzoate, isoamyl p-dimethylaminobenzoate, N,N-dimethylbenzylamine, and 4,4'-bis(diethylamino)benzophenones can be used.

### (Organic-inorganic composite-based thin film)

Specific examples of the organic-inorganic composite body according to the present invention include a molded body formed by pouring into a mold and a thin film formed by coating the substrate. The method of forming a thin film is not particularly limited as long as the method comprises coating the substrate followed by drying. It is preferred to perform irradiation with light containing a wavelength of 350 nm or less after drying, and thus, a thin film with a higher hardness (organic-inorganic composite-based thin film) can be obtained. In the present invention, "light containing a wavelength of 350 nm or less" refers to ultraviolet light having not only a wavelength of 350 nm or less but also a wavelength greater than 350 nm. This is because a photosensitive compound absolutely requires a wavelength of 350 nm or less, whereas an ultraviolet-curable compound is photosensitive at a wavelength greater than 350 nm, more preferably near 365 nm.

The pencil hardness, as defined in the JIS K 5600-5-4 Pencil Method, of a dried thin film (corresponding to the interior of a thin film irradiated with light) formed on a glass substrate is about 1H to 4H, and preferably 2H to 4H in view of the adhesion to the substrate and hardness. In addition, the pencil hardness, as defined in the JIS K 5600-5-4 Pencil Method, of a thin film irradiated with light that is formed on a glass substrate is preferably 5H or more, and more preferably 7H or more.

Examples of a substrate on which the thin film described herein can be formed include metal, ceramic, glass, and plastic. Conventionally, it is difficult to form a thin film on a plastic substrate, so the substrates for thin film formation were limited to inorganic substrates such as glass. In contrast, the thin film according to the present invention allows for easy formation of a coating even on plastic substrates on which a coating is difficult to form, and is also suitable for plastic optical parts. Examples of such plastics include polycarbonate resin, acrylic resin, polyimide resin, polyester resin, epoxy resin, liquid crystal polymer, and polyethersulfone.

In addition, as a method of coating an organic-inorganic composite body-forming composition, a known coating method can be used, and examples of the coating method include dipping, spraying, bar coating, roll coating, spin coating, curtain coating, gravure printing, silk screen printing, and ink jet printing. Further, the thickness of the film to be formed is not particularly limited, and for example, is about 0.05 to 200 µm.

The film formed by coating an organic-inorganic composite body-forming composition is dried preferably, for example, at 40 to 200°C for about 1 to 120 minutes, and more preferably at 60 to 120°C for about 10 to 60 minutes.

In addition, irradiation with light containing a wavelength of 350 nm or less can be performed, for example, by using a known device such as a high pressure mercury lamp, a low-pressure mercury lamp, a metal halide lamp, or an excimer lamp. The light used for irradiation is light whose main component is light having a wavelength preferably in the range of 150 to 350 nm, more preferably in the range of 250 to 310 nm. If the composition is sensitive to wavelengths in the ranges but does not respond to light having a wavelength greater than 350 nm, preferably greater than 310 nm, the composition is hardly affected by sunlight. In addition, the light irradiation dose is for example about 0.1 to 100 J/cm², and in view of film curing efficiency (the relationship between irradiation energy and the degree of film curing), is preferably about 0.2 to 20 J/cm², and more preferably about 0.5 to 10 J/cm².

Here, irradiation with light having a wavelength of 350 nm or less refers to irradiation using a light source producing light having a wavelength of 350 nm or less as a component, preferably irradiation using a light source producing light having a wavelength of 350 nm or less as the main component, in other words, irradiation using a light source producing light whose most abundant wavelength is 350 nm or less.

In addition, in the organic-inorganic composite-based thin film according to the present invention, the carbon content on the film surface is preferably lower than that on the back surface of the film, and the minimum carbon content in the distance from the film surface to a depth of 0.5 µm is more preferably 80% or less, much more preferably 2 to 60%, of the carbon content on the back surface of the film. Here, "the carbon content on the film surface is lower than that on the back surface of the film" means that the total amount of carbon from the film surface to the core of the film is smaller than that from the back surface of the film to the core of the film.

In addition, in the organic-inorganic composite-based thin film according to the present invention, the carbon content in the distance from the film surface to the specified depth preferably increases gradually. The depth to which the carbon content gradually increases is preferably 5 to 80% of the film thickness, and more preferably 10 to 50%. Specifically, if the film thickness is, for example, about 1 to 2.5 µm, the depth to which the carbon content gradually increases is about 50 to 2,000 nm.

### (Method for producing the organic-inorganic composite body and the organic-inorganic composite-based thin film)

Examples of a method for producing the organic-inorganic composite body and the organic-inorganic composite-based thin film according to the present invention include a method comprising irradiating an organosilicon compound and/or a condensate thereof with light containing a wavelength of 350 nm or less in the presence of a photosensitive compound, an ultraviolet-curable compound, and a photopolymerization initiator, and an organic-inorganic composite body-forming composition as described later can be used.

The organosilicon compound used in the production method described herein is preferably a condensate thereof, and the average particle size thereof is preferably 50 nm or less, and more preferably 20 nm or less. In addition, the photosensitive compound used in the production method described herein is preferably a hydrolysate and/or condensate thereof, and especially, a hydrolysate and/or condensate of a metal chelate compound is preferred. The average particle size thereof is preferably 20 nm or less, and more preferably 10 nm or less. Thus, the transparency of the organic-inorganic composite body (organic-inorganic composite-based thin film) can be increased. The average particle sizes can be measured, for example, with an HPPS from Malvern Instruments Ltd.

### (Organic-inorganic composite body-forming composition)

The organic-inorganic composite body-forming composition according to the present invention is not particularly limited as long as it is a composition containing
a) an organosilicon compound represented by Formula (I)

   RₙSiX₄₋ₙ ... (I)

   (wherein R represents an organic group having a carbon atom directly bonded to Si; X represents a hydroxy group or a hydrolyzable group; n represents 1 or 2, with the proviso that when n is 2, each R may be the same or different, and when (4-n) is 2 or more, each X may be the same or different), and/or a condensate thereof;
b) at least one photosensitive compound selected from the group consisting of metal chelate compounds, metal-organic acid salt compounds, metal compounds having 2 or more hydroxy groups or hydrolyzable groups, hydrolysates thereof, and condensates thereof;
c) an ultraviolet-curable compound selected from the group consisting of polyester(meth)acrylate, polyurethane(meth)acrylate and epoxy poly(meth)acrylate; and
d) a photopolymerization initiator.
The organic-inorganic composite body-forming composition preferably further contains water and/or a solvent. The organosilicon compound represented by Formula (I) and the photosensitive compound are the same as above.

The used solvent is not particularly limited, and examples thereof include aromatic hydrocarbons such as benzene, toluene, and xylene; aliphatic hydrocarbons such as hexane and octane; alicyclic hydrocarbons such as cyclohexane and cyclopentane; ketones such as acetone, methyl ethyl ketone, and cyclohexanone; ethers such as tetrahydrofuran and dioxane; esters such as ethyl acetate and butyl acetate; amides such as N,N-dimethylformamide and N,N-dimethylacetamide; sulfoxides such as dimethyl sulfoxide; alcohols such as methanol and ethanol; polyalcohol derivatives such as ethylene glycol monomethyl ether and ethylene glycol monomethyl ether acetate. These solvents can be used alone or in combination of two or more.

The solid content (organosilicon component, photosensitive compound component, ultraviolet-curable compound, and photopolymerization initiator) in the organic-inorganic composite body-forming composition according to the present invention is preferably 1 to 75% by mass, and more preferably 10 to 60% by mass. The content of the ultraviolet-curable compound is 2 to 98% by mass, and more preferably 5 to 95% by mass, with respect to the total mass of the organosilicon compound and/or the condensate thereof, the photosensitive compound, the ultraviolet-curable compound, and the photopolymerization initiator.

The content of the photosensitive compound varies depending on the type thereof, but generally, the content of metal atoms in the photosensitive compound is 0.01 to 0.5 molar equivalent, and preferably 0.05 to 0.2 molar equivalent, with respect to Si in the organosilicon compound.

A tetrafunctional silane or a colloidal silica can also be added to the organic-inorganic composite body-forming composition according to the present invention in order to increase the hardness of the coating obtained. Examples of the tetrafunctional silane include tetraaminosilane, tetrachlorosilane, tetraacetoxysilane, tetramethoxysilane, tetraethoxysilane, tetrabutoxysilane, tetrabenzyloxysilane, tetraphenoxysilane, tetra(meth)acryloxysilane, tetrakis[2-(meth)acryloxyethoxy]silane, tetrakis(2-vinyloxyethoxy)silane, tetraglycidyloxysilane, tetrakis(2-vinyloxybutoxy)silane, and tetrakis(3-methyl-3-oxetanemethoxy)silane. In addition, examples of the colloidal silica include colloidal silica dispersed in water and colloidal silica dispersed in an organic solvent such as methanol or isopropyl alcohol.

In addition, a filler can also be separately added to and dispersed in the organic-inorganic composite body-forming composition according to the present invention in order enhance various properties such as to color or thicken the coating obtained, prevent ultraviolet radiation from penetrating the coating to the substrate, confer corrosion protection, or heat resistance. Examples of filler include water-insoluble pigments such as organic pigments and inorganic pigments or particulate, fibrous, or scaly metals and alloys other than pigments, and oxides, hydroxides, carbides, nitrides, and sulfides thereof. Specific examples of the filler include particulate, fibrous, or scaly iron, copper, aluminum, nickel, silver, zinc, ferrite, carbon black, stainless steel, silicon dioxide, titanium oxide, aluminum oxide, chromium oxide, manganese oxide, iron oxide, zirconium oxide, cobalt oxide, synthetic mullite, aluminum hydroxide, iron hydroxide, silicon carbide, silicon nitride, boron nitride, clay, diatomaceous earth, slaked lime, gypsum, talc, barium carbonate, calcium carbonate, magnesium carbonate, barium sulfate, bentonite, mica, zinc green, chrome green, cobalt green, viridian, Guignet's green, cobalt chrome green, Scheele's green, green earth, manganese green, pigment green, ultramarine blue, iron blue, mountain blue, cobalt blue, cerulean blue, copper borate, molybdenum blue, copper sulfide, cobalt violet, Mars violet, manganese violet, pigment violet, lead suboxide, calcium metaplumbate, zinc yellow, lead sulfide, chrome yellow, yellow ocher, cadmium yellow, strontium yellow, titan yellow, litharge, pigment yellow, cuprous oxide, cadmium red, selenium red, chrome vermilion, colcothar, zinc white, antimony white, basic lead sulfate, titanium white, lithopone, lead silicate, zirconium oxide, tungsten white, manganous flowers of zinc, Pattinson's white, lead phthalate, manganese white, lead sulfate, graphite, bone black, diamond black, thermatomic black, vegetable black, potassium titanate whisker, and molybdenum disulfide.

In addition, known dehydrators such as methyl orthoformate, methyl orthoacetate, and tetraethoxysilane, various surfactants, additives such as silane coupling agents, titanate coupling agents, dyes, dispersants, thickeners, and leveling agents other than those listed above can also be added to the organic-inorganic composite body-forming composition according to the present invention.

### (Method of preparing the organic-inorganic composite body-forming composition)

In the method of preparing the organic-inorganic composite body-forming composition according to the present invention, water and/or a solvent are added as needed, and an organosilicon compound, a photosensitive compound, an ultraviolet-curable compound, and a photopolymerization initiator are mixed.

Specifically, for example, a photosensitive compound is mixed into a solvent, to which a specified volume of water is then added for (partial) hydrolysis, followed by the addition of an organosilicon compound for (partial) hydrolysis. On the other hand, an ultraviolet-curable compound is dissolved in a solvent, to which a photopolymerization initiator is then added. Then, both solutions are mixed together. These four components can also be mixed together at the same time. Further, examples of a method of mixing an organosilicon compound and a photosensitive compound include a method of mixing an organosilicon compound and a photosensitive compound and then adding water for (partial) hydrolysis, and a method of (partially) hydrolyzing an organosilicon compound and a photosensitive compound separately and then mixing the hydrolysates together. Although it is not necessarily needed to add water or a solvent, it is preferred to add water to form a (partial) hydrolyzed product. The specified volume of water varies depends on the type of the photosensitive compound, and for example, when the photosensitive compound is a metal compound having 2 or more hydroxy groups or hydrolyzable groups, 0.5 mol or more of water is preferably used with respect to 1 mol of metal compound, and 0.5 to 2 mol of water is more preferably used. Further, when the photosensitive compound is a metal chelate compound or a metal-organic acid salt compound, 5 to 100 mol of water is preferably used with respect to 1 mol of the metal chelate compound or the metal-organic acid salt compound, and 5 to 20 mol of water is more preferably used.

### (Additive for ultraviolet-curable compounds)

The addition of an organic-inorganic composite body-forming composition containing
a) an organosilicon compound represented by Formula (I)

   RₙSiX₄₋ₙ ... (I)

   (wherein R represents an organic group having a carbon atom directly bonded to Si, and X represents a hydroxy group or a hydrolyzable group; n represents 1 or 2, with the proviso that when n is 2, each R may be the same or different, and when (4-n) is 2 or more, each X may be the same or different) and/or a condensate thereof; and
b) at least one photosensitive compound selected from the group consisting of metal chelate compounds, metal-organic acid salt compounds, and metal compounds having 2 or more hydroxy groups or hydrolyzable groups, hydrolysates thereof, and condensates thereof
before being mixed into an ultraviolet-curable compound as defined herein, to the ultraviolet-curable compound or resin, can increase the hardness of the composite body.

The organic-inorganic composite body-forming composition having the above composition is the same as that in described in WO2006/088079, and can be prepared according to the description thereof. The ratio of the amount of composition added to the amount of the ultraviolet-curable compound may be appropriately selected depending on the intended use.

### [Examples]

The present invention will be described below in more detail by referring to Examples, but the technical scope of the present invention is not limited to these exemplifications.

### (Example A: Preparation of an organic-inorganic composite body-forming composition)

### [Example 1]

### 1. Photosensitive compound

30.3 g of diisopropoxybis(acetylacetonato)titanium (T-50, Nippon Soda Co., Ltd.; solid content in terms of titanium oxide, 16.5% by weight) was dissolved in 58.4 g of a mixed solvent having a 60:20:20 ratio of ethanol/ethyl acetate/2-butanol, into which 11.3 g (10 times the mole of titanium oxide) of ion-exchange water was then dropped slowly under stirring for hydrolysis. After 1 day, the hydrolyzed solution was filtered to obtain a yellow, transparent nano-dispersion of titanium oxide, [A-1], having a concentration of 5% by weight in terms of titanium oxide. The titanium oxide had an average particle size of 4.1 nm and was monodisperse.

### 2. Organosilicon compound

Vinyltrimethoxysilane, [B-1], (KBM-1003, Shin-Etsu Chemical Co., Ltd.) was used as the organosilicon compound.

### 3. Mixed solution (photosensitive compound + condensate of the hydrolysate of a silane compound)

The mixed solution [C-1], of the above [A-1] and [B-1] was prepared so that the element ratio of Ti to Si becomes 1 to 9. [C-1] had a solid content of 27% by weight.

### 4. Ultraviolet-curable compound solution

As the ultraviolet-curable compound, an urethane acrylate oligomer (SHIKOH UV7600B, Nippon Synthetic Chemical Industry Co., Ltd.) was dissolved in a mixed solution having a 60:20:20 ratio of ethanol/ethyl acetate/2-butanol so that the content of the oligomer becomes 30% by weight. In this solution, 1-hydroxy-cyclohexyl-phenyl-ketone (from Wako Pure Chemical Industries, Ltd.) as the photopolymerization initiator was dissolved so that the content of the initiator becomes 4% by weight with respect to the solid content of the urethane acrylate oligomer, to prepare the solution [D-1].

### 5. Preparation of an organic-inorganic composite body-forming composition

The above [C-1] solution and [D-1] solution were mixed together so that the solid content ratio of [C-1] to [D-1] becomes 10% by weight to 90% by weight, to prepare the coating-forming solution [E-1].

### [Example 2]

The above [C-1] and [D-1] were mixed together to prepare the coating-forming solution [E-2], in the same way as in Example 1 except that the solid content ratio of [C-1]/[D-1] was 50% by weight/50% by weight.

### [Example 3]

The above [C-1] and [D-1] were mixed together to prepare the coating-forming solution [E-3], in the same way as in Example 1 except that the solid content of [C-1] / [D-1] was 90% by weight/10% by weight.

### [Example 3']

A film was prepared in the same way as in Example 3 except for the use of 1-hydroxy-cyclohexyl-phenyl-ketone (Irgacure [trademark] 184) as the polymerization initiator and ethanol as the solvent.

### [Example 4]

### 1. Photosensitive compound

30.3 g of diisopropoxybis(acetylacetonato)titanium (T-50, Nippon Soda Co., Ltd.; solid content in terms of titanium oxide: 16.5% by weight) was dissolved in 58.4 g of a mixed solvent having a 60:20:20 ratio of ethanol/ethyl acetate/2-butanol, into which 11.3 g (10 times the mole of titanium oxide) of ion-exchange water was then dropped slowly under stirring for hydrolysis. After 1 day, the hydrolyzed solution was filtered to obtain a yellow, transparent nano-dispersion of titanium oxide, [A-1], having a concentration of 5% by weight in terms of titanium oxide. The titanium oxide had an average particle size of 4.1 nm and was monodisperse.

### 2. Organosilicon compound

The solution [F-1], obtained by mixing vinyltrimethoxysilane, [B-1], (KBM-1003, Shin-Etsu Chemical Co., Ltd.) and 3-methacryloxypropyltrimethoxysilane, [B-2], (KBM-503, Shin-Etsu Chemical Co., Ltd.) at a 7:3 molar ratio (= vinyltrimethoxysilane/3-methacryloxypropyltrimethoxysilane) was used as an organosilicon compound.

### 3. Synthesis of a mixed solution (photosensitive compound + condensate of the hydrolysate of a silane compound)

The above [A-1] and [F-1] were mixed together so that the element ratio of Ti to Si becomes 1 to 9, and the mixture was stirred for 12 hours to prepare the solution [C-2]. C-2 had a solid content of 34.7% by weight.

### 4. Ultraviolet-curable compound solution

As the ultraviolet-curable compound, an urethane acrylate oligomer (SHIKOH UV7600B, Nippon Synthetic Chemical Industry Co., Ltd.) was dissolved in a mixed solution having a 60:20:20 ratio of ethanol/ethyl acetate/2-butanol so that the content of the oligomer becomes 40% by weight. In this solution, 1-hydroxy-cyclohexyl-phenyl-ketone (Wako Pure Chemical Industries, Ltd.) as the photopolymerization initiator was dissolved so that the content of the initiator becomes 4% by weight with respect to the solid content of the urethane acrylate oligomer, to prepare the solution [D-2].

### 5. Preparation of an organic-inorganic composite body-forming composition

The above [C-2] solution and [D-2] solution were mixed together so that the solid content ratio of [C-2] to [D-2] becomes 50% by weight/50% by weight, to prepare the coating-forming solution [E-4].

### [Example 5]

The coating-forming solution [E-5] was prepared in the same way as in Example 4 except for the use of a solution, [F-2], obtained by mixing vinyltrimethoxysilane, [B-1], (KBM-1003, Shin-Etsu Chemical Co., Ltd.) and 3-acryloxypropyltrimethoxysilane, [B-3], (KBM-5103, Shin-Etsu Chemical Co., Ltd.) as the organosilicon compounds at a 7:3 molar ratio (= vinyltrimethoxysilane/3-acryloxypropyltrimethoxysilane).

### [Example 6]

The coating-forming solution [E-6] was prepared in the same way as in Example 4 except for the use of a solution, [F-3], obtained by mixing vinyltrimethoxysilane, [B-1], (KBM-1003, Shin-Etsu Chemical Co., Ltd.) and 3-aminopropyltrimethoxysilane, [B-4], (KBM-903, Shin-Etsu Chemical Co., Ltd.) as the organosilicon compounds at a 9:1 molar ratio (= vinyltrimethoxysilane/3-aminopropyltrimethoxysilane).

### [Example 7]

The coating-forming solution [E-7] was prepared in the same way as in Example 4 except for the use of the solution [F-4], obtained by mixing vinyltrimethoxysilane, [B-1], (KBM-1003, Shin-Etsu Chemical Co., Ltd.) and 3-glycidoxypropyltrimethoxysilane, [B-5], (KBM-403, Shin-Etsu Chemical Co., Ltd.) as the organosilicon compounds at a 7:3 molar ratio (= vinyltrimethoxysilane/3-glycidoxypropyltrimethoxysilane).

### [Example 8]

### 1. Photosensitive compound

30.3 g of diisopropoxybis(acetylacetonato)titanium (T-50, Nippon Soda Co., Ltd.; solid content in terms of titanium oxide: 16.5% by weight) was dissolved in 58.4 g of a mixed solvent having a 60:20:20 ratio of ethanol/ethyl acetate/2-butanol, into which 11.3 g (10 times the mole of titanium oxide) of ion-exchange water was then dropped slowly under stirring for hydrolysis. After 1 day, the hydrolyzed solution was filtered to obtain a yellow, transparent nano-dispersion of titanium oxide, [A-1], having a concentration of 5% by weight in terms of titanium oxide. The titanium oxide had an average particle size of 4.1 nm and was monodisperse.

### 2. Organosilicon compound

The solution [F-5], obtained by mixing vinyltrimethoxysilane, [B-1], (KBM-1003, Shin-Etsu Chemical Co., Ltd.) and 3-methacryloxypropyltrimethoxysilane, [B-2], (KBM-503, Shin-Etsu Chemical Co., Ltd.) was used as an organosilicon compound, at a 9:1 molar ratio (= vinyltrimethoxysilane/3-methacryloxypropyltrimethoxysilane).

### 3. Synthesis of a mixed solution (of a photosensitive compound and a condensate of the hydrolysate of a silane compound)

The above [A-1] and [F-5] were mixed together so that the element ratio of Ti to Si becomes 1 to 9, and the mixture was stirred for 12 hours to prepare the solution [C-3]. [C-3] had a solid content of 29.2% by weight.

### 4. Ultraviolet-curable compound solution

As the ultraviolet-curable compound, an urethane acrylate oligomer (SHIKOH UV7600B, Nippon Synthetic Chemical Industry Co., Ltd.) was dissolved in a mixed solution having a 60:20:20 ratio of ethanol/ethyl acetate/ 2-butanol so that the content of the oligomer becomes 40% by weight. In this solution, 1-hydroxy-cyclohexyl-phenyl-ketone (Wako Pure Chemical Industries, Ltd.) as the photopolymerization initiator was dissolved so that the content of the initiator becomes 4% by weight with respect to the solid content of the urethane acrylate oligomer, to prepare the solution [D-2].

### 5. Preparation of an organic-inorganic composite body-forming composite

The above [C-3] solution and [D-2] solution were mixed together so that the solid content ratio of [C-3] to [D-2] becomes 10% by weight/90% by weight, to prepare the coating-forming solution [E-8].

### [Example 8']

A film was prepared in the same way as in Example 8 except for the use of 1-hydroxy-cyclohexyl-phenyl-ketone (Irgacure [trademark] 184) as the polymerization initiator and ethanol as the solvent.

### [Example 9]

The above [C-3] and [D-2] were mixed together to prepare the coating-forming solution [E-9], in the same way as in Example 8 except that the solid content ratio of [C-3]/[D-2] was 90% by weight/10% by weight.

### [Example 9']

A film was prepared in the same way as in Example 9 except for the use of 1-hydroxy-cyclohexyl-phenyl-ketone (Irgacure [trademark] 184) as the polymerization initiator and ethanol as the solvent.

### (Example B: Formation of a thin film)

A soda-lime glass substrate [SLG] or a polycarbonate substrate (Iupilon NF-2000, Mitsubishi Engineering-Plastics Corporation) [PC] was bar-coated with each of the coating-forming solutions [E-1] to [E-8] obtained in Examples 1 to 8, and heated at 60°C for 30 minutes with a hot air circulation type of dryer. Then, the substrate was irradiated with ultraviolet light at a cumulative ultraviolet dose of 2,100 mJ/cm² from a condensing highpressure mercury lamp (UV light whose main components are light having wavelengths of 365 nm, 313 nm, and 254 nm; Eye Graphics Co., Ltd.; single-lamp; 120 W/cm; lamp height, 9.8 cm; conveyor speed, 8 m/min), to obtain a thin film.

With the coating-forming solution obtained in Example 9, [E-9], a 2-layer thin film was prepared in the following way:
A coating was formed by bar coating with the coating-forming solution, [E-8], prepared in Example 8, dried at 60°C, and then irradiated with ultraviolet light at a cumulative ultraviolet dose of 800 mJ/cm², to obtain an about 4-µm thick thin film. Next, on this thin film, a coating was formed by bar coating with the coating-forming solution [E-9] so that the film thickness becomes about 3 µm, dried at 60°C, then irradiated with ultraviolet light at an ultraviolet dose of 4,000 mJ/cm², to obtain the 2-layer thin film.

### [Example 10]

### 1. Photosensitive compound

30.3 g of diisopropoxybis(acetylacetonato)titanium (T-50, Nippon Soda Co., Ltd.; solid content in terms of titanium oxide: 16.5% by weight) was dissolved in 58.4 g of a mixed solvent having a 60:20:20 ratio of ethanol/ethyl acetate/2-butanol, into which 11.3 g (10 times the mole of titanium oxide) of ion-exchange water was then dropped slowly under stirring for hydrolysis. After 1 day, the hydrolyzed solution was filtered to obtain a yellow, transparent nano-dispersion of titanium oxide, [A-1], having a concentration of 5% by weight in terms of titanium oxide. The titanium oxide had an average particle size of 4.1 nm and was monodisperse. 2. Organosilicon compound

Vinyltrimethoxysilane, [B-1], (KBM-1003, Shin-Etsu Chemical Co., Ltd.) was used as the organosilicon compound.

### 3. Synthesis of a mixed solution (a photosensitive compound + a condensate of the hydrolysate of a silane compound)

The mixed solution [C-1], of the above [A-1] and [B-1] was prepared so that the element ratio of Ti to Si becomes 1 to 9. [C-1] had a solid content of 27% by weight.

### 4. Ultraviolet-curable compound solution

As the ultraviolet-curable compound, an urethane acrylate oligomer (SHIKOH UV7600B, Nippon Synthetic Chemical Industry Co., Ltd.) was dissolved in a mixed solution having a 60:20:20 ratio of ethanol/ethyl acetate/2-butanol so that the content of the oligomer is 40% by weight. In this solution, 2-hydroxy-2-methyl-1-phenyl-propan-1-one (Darocure 1173, Ciba Specialty Chemicals K.K.) as the photopolymerization initiator was dissolved so that the content of the initiator becomes 4% by weight with respect to the solid content of the urethane acrylate oligomer, to prepare the solution [D-3].

### 5. Preparation of a composite for forming an organic-inorganic composite body

The above [C-1] solution and [D-3] solution were mixed together so that the solid content ratio of [C-1]/[D-3] becomes 50% by weight/50% by weight, to prepare the coating-forming composition [E-10].

### [Example 11]

The above [C-1] and [D-3] were mixed together to prepare the coating-forming composition [E-11], in the same way as in Example 10 except that the solid content ratio of [C-1] / [D-3] was 90% by weight/10% by weight.

### [Example 12]

The coating-forming composition [E-12] was prepared in the same way as in Example 10 except for the use of 3-methacryloxypropyltrimethoxysilane, [B-2], (KBM-503, Shin-Etsu Chemical Co., Ltd.) as the organosilicon compound.

### [Example 13]

The coating-forming composition [E-13] was prepared in the same way as in Example 11 except for the use of 3-methacryloxypropyltrimethoxysilane, [B-2], (KBM-503, Shin-Etsu Chemical Co., Ltd.) as the organosilicon compound.

### [Example 14]

The coating-forming composition [E-14] was prepared in the same way as in Example 10 except for the use of 3-glycidoxypropyltrimethoxysilane, [B-3], (KBM-403, Shin-Etsu Chemical Co., Ltd.) as the organosilicon compound.

### [Example 15]

The coating-forming composition [E-15] was prepared in the same way as in Example 11 except for the use of 3-glycidoxypropyltrimethoxysilane, [B-3], (KBM-403, Shin-Etsu Chemical Co., Ltd.) as the organosilicon compound.

### [Example 16]

### 1. Photosensitive compound

23.0 g of zirconium acetyldiacetonate (ZR-181, Nippon Soda Co., Ltd.; solid content in terms of zirconium oxide: 15.0% by weight) was dissolved in 41.0 g of a mixed solvent having a 60:20:20 ratio of ethanol/ethyl acetate/2-butanol, into which 5.0 g (10 times the mole of zirconium oxide) of ion-exchange water was then dropped slowly under stirring for hydrolysis. After 1 day, the hydrolyzed solution was filtered to obtain a yellow, transparent nano-dispersion of zirconium oxide, [A-2], having a concentration of 5% by weight in terms of zirconium oxide. The particles in the nano-dispersion had a broad particle size distribution having a peak at 4 nm.

### 2. Organosilicon compound

The solution [F-1], obtained by mixing vinyltrimethoxysilane, [B-1], (KBM-1003, Shin-Etsu Chemical Co., Ltd.) and 3-methacryloxytrimethoxysilane, [B-2], (KBM-503, Shin-Etsu Chemical Co., Ltd.) at a 7:3 molar ratio (= vinyltrimethoxysilane/3-methacryloxypropyltrimethoxysilane) was used as an organosilicon compound.

### 3. Synthesis of a mixed solution (of a photosensitive compound and a condensate of the hydrolysate of a silane compound)

The above [A-2] and [F-1] were mixed together so that the element ratio of Zr to Si becomes 1 to 9, and the mixture was stirred for 12 hours to prepare the solution [C-4]. [C-4] had a solid content of 25.2% by weight.

### 4. Ultraviolet-curable compound solution

As the ultraviolet-curable compound, an urethane acrylate oligomer (SHIKOH UV7600B, Nippon Synthetic Chemical Industry Co., Ltd.) was dissolved in a mixed solution having a 60:20:20 ratio of ethanol/ethyl acetate/2-butanol so that the content of the oligomer becomes 40% by weight. In this solution, 2-hydroxy-2-methyl-1-phenyl-propan-1-one (Darocure [trademark] 1173) was dissolved as a photopolymerization initiator so that the content of the initiator becomes 4% by weight with respect to the solid content of the urethane acrylate oligomer, to prepare the solution [D-3].

### 5. Preparation of an organic-inorganic composite body-forming composite

The above [C-4] solution and [D-3] solution were mixed together so that the solid content ratio of [C-4]/[D-3] becomes 50% by weight/50% by weight, to prepare the coating-forming solution [E-16].

### [Example 17]

The above [C-4] and [D-3] were mixed together to prepare the coating-forming solution [E-17], in the same way as in Example 16 except that the solid content ratio of [C-4]/[D-3] was 10% by weight/90% by weight.

### [Example 18]

### 1. Photosensitive compound

11.0 g of tris(acetylacetonato)aluminum (Acros Organics b.v.b.a.) was dissolved in 199.0 g of a mixed solvent having a 60:20:20 ratio of ethanol/ethyl acetate/2-butanol, to prepare a colorless and transparent solution, [A-3], having a solid content of 0.8% by weight in terms of aluminum oxide.

### 4. Additive for ultraviolet-curable compounds

The above [A-3] and [F-1] were mixed together so that the element ratio of Al to Si becomes 2 to 98, and into the mixture, 13.5 g (3 times the mole of Si) of ion-exchange water was dropped slowly under stirring, to prepare the hydrolyzed solution [C-5]. [C-5] had a solid content of 22.5% by weight.

### 5. Preparation of an organic-inorganic composite body-forming composition

The above [C-5] solution and [D-3] solution were mixed together so that the solid content ratio of [C-5]/[D-3] becomes 50% by weight/50% by weight, to prepare the coating-forming solution [E-18].

### [Example 19]

The above [C-5] and [D-3] were mixed together to prepare the coating-forming solution [E-19], in the same way as in Example 18 except that the solid content ratio of [C-5] / [D-3] was 10% by weight/90% by weight.

### [Example 20]

### 1. Photosensitive compound

100.0 g of tetraisopropoxy titanium (A-1, Nippon Soda Co., Ltd.; solid content in terms of titanium oxide: 28.0% by weight) was dissolved in 418.0 g of a mixed solvent having a 60:20:20 ratio of ethanol/ethyl acetate/2-butanol. To this solution, 42.1 g (twice the mole of titanium oxide) of acetic acid was added under stirring, and then 63.1 g (10 times the mole of titanium oxide) of ion-exchange water was dropped slowly for hydrolysis. After 1 day, the hydrolyzed solution was filtered to obtain a yellow, transparent nano-dispersion of zirconium oxide, [A-4], having a concentration of 5% by weight in terms of titanium oxide.

### 3. Mixed solution (a photosensitive compound + a condensate of the hydrolysate of a silane compound)

The above [A-4] and [F-1] were mixed together so that the element ratio of Ti to Si becomes 1 to 9, and the mixture was stirred for 12 hours to prepare a solution, [C-6]. [C-6] had a solid content of 33.2% by weight.

### 5. Preparation of an organic-inorganic composite body-forming composite

The above [C-6] solution and [D-3] solution were mixed together so that the solid content ratio of [C-6]/[D-3] becomes 90% by weight/10% by weight, to prepare the coating-forming solution [E-20].

### [Example 21]

### 5. Preparation of an organic-inorganic composite body-forming composite

The above [C-6] solution and [D-3] solution were mixed together to prepare the coating-forming solution [E-21], in the same way as in Example 20 except that the solid weight percent ratio of [C-6]/[D-3] was 50% by weight/50% by weight.

### [Example 22]

### 5. Preparation of an organic-inorganic composite body-forming composite

The above [C-6] solution and [D-3] solution were mixed together to prepare the coating-forming solution [E-22], in the same way as in Example 20 except that the solid weight percent ratio of [C-6]/[D-3] was 10% by weight/90% by weight.

### [Example 23]

### 4. Ultraviolet-curable compound solution

As the ultraviolet-curable compound, an urethane acrylate oligomer (Hitaloid 7903-1, Hitachi Chemical Co., Ltd.) was dissolved in a mixed solution having a 60:20:20 ratio of ethanol/ethyl acetate/2-butanol so that the content of the oligomer becomes 40% by weight. In this solution, 2-hydroxy-2-methyl-1-phenyl-propan-1-one (Darocure [trade name] 1173) was dissolved as a photopolymerization initiator so that the content of the initiator becomes 4% by weight with respect to the solid content of the urethane acrylate oligomer, to prepare the solution [D-4].

### 5. Preparation of an organic-inorganic composite body-forming composite

The above [C-2] solution and [D-4] solution were mixed together so that the solid content ratio of [C-2] to [D-4] becomes 90% by weight to 10% by weight, to prepare the coating-forming solution [E-23].

### [Example 24]

The above [C-2] solution and [D-4] solution were mixed together to prepare the coating-forming solution [E-24], in the same way as in Example 23 except that the solid content ratio of [C-2]/[D-4] was 50% by weight/50% by weight.

### [Example 25]

The above [C-2] solution and [D-4] solution were mixed together to prepare the coating-forming solution [E-25], in the same way as in Example 23 except that the solid content ratio of [C-2]/[D-4] was 10% by weight/90% by weight.

### [Example 26]

### 4. Ultraviolet-curable compound solution

As the ultraviolet-curable compound, an epoxy acrylate oligomer (NEOPOL 8318, Japan U-PiCA Company, Ltd.) was dissolved in a mixed solution having a 60:20:20 ratio of ethanol/ethyl acetate/2-butanol so that the content of the oligomer becomes 40% by weight. In this solution, 2-hydroxy-2-methyl-1-phenyl-propan-1-one (Darocure [trademark] 1173) was dissolved as a photopolymerization initiator so that the content of the initiator becomes 4% by weight with respect to the solid content of the epoxy acrylate oligomer, to prepare the solution [D-5].

### 5. Preparation of an organic-inorganic composite body-forming composite

The above [C-2] solution and [D-5] solution were mixed together so that the solid content ratio of [C-2]/[D-5] was 90% by weight/10% by weight, to prepare the coating-forming solution [E-26].

### [Example 27]

The above [C-2] solution and [D-5] solution were mixed together to prepare the coating-forming solution [E-27], in the same way as in Example 26 except that the solid content ratio of [C-2]/ [D-5] was 50% by weight/50% by weight.

### [Example 28]

The above [C-2] solution and [D-5] solution were mixed together to prepare the coating-forming solution [E-28], in the same way as in Example 26 except that the solid content ratio of [C-2]/[D-5] was 10% by weight/90% by weight.

### (Example B: Formation of a thin film)

A soda-lime glass substrate [SLG] or a polycarbonate substrate (Iupilon NF-2000, Mitsubishi Engineering-Plastics Corporation) [PC] was bar-coated with each of the coating-forming solutions [E-10] to [E-15] obtained in Examples 10 to 15, and heated at 60°C for 30 minutes with a hot air circulation type of dryer. Then, the substrate was irradiated with ultraviolet light at a cumulative ultraviolet dose of 2100 mJ/cm² from a condensing highpressure mercury lamp (UV light whose main components were light having wavelengths of 365 nm, 313 nm, and 254 nm; Eye Graphics Co., Ltd.; single-lamp; 120 W/cm; lamp height, 9.8 cm; conveyor speed, 8 m/min), to obtain a thin film.

The coating-forming solutions [E-16], [E-18], [E-21], [E-24], and [E-27] obtained in Examples 16, 18, 21, 24, and 27 were used to obtain thin films, in the same way as in Examples 1 to 8 except for heating at 100°C for 5 minutes.

The coating-forming solutions [E-20], [E-23], and [E-26] obtained in Examples 20, 23, and 26 were used to obtain thin films, in the same way as in Examples 1 to 8 except for heating at 120°C for 5 minutes.

The coating-forming solutions [E-17], [E-19], [E-22], [E-25], and [E-28] obtained in Examples 17, 19, 22, 25, and 28 were used to obtain thin films, in the same way as in Examples 1 to 8 except for heating at 60°C for 5 minutes.

### [Comparative Example 1]

A coating was formed in the same way as in Examples 1 to 9 except for the use of [D-1] as the coating-forming solution.

### [Comparative Example 2]

A coating was formed in the same way as in Examples 1 to 9 except for the use of [C-2] as the coating-forming solution.

### [Comparative Example 3]

A coating was formed in the same way as in Examples 1 to 8 except for the use of [D-4] as the coating-forming solution.

### [Comparative Example 4]

A coating was formed in the same way as in Examples 1 to 8 except for the use of [D-5] as the coating-forming solution.

### (Evaluation Tests)

### 1. Film component test

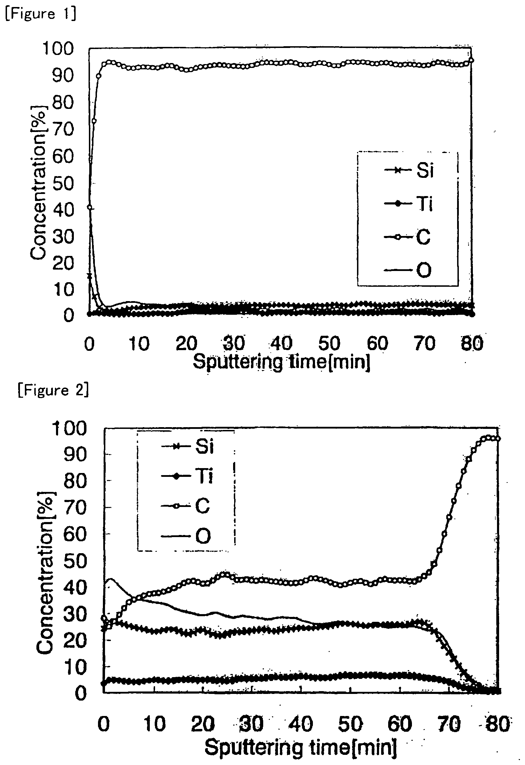

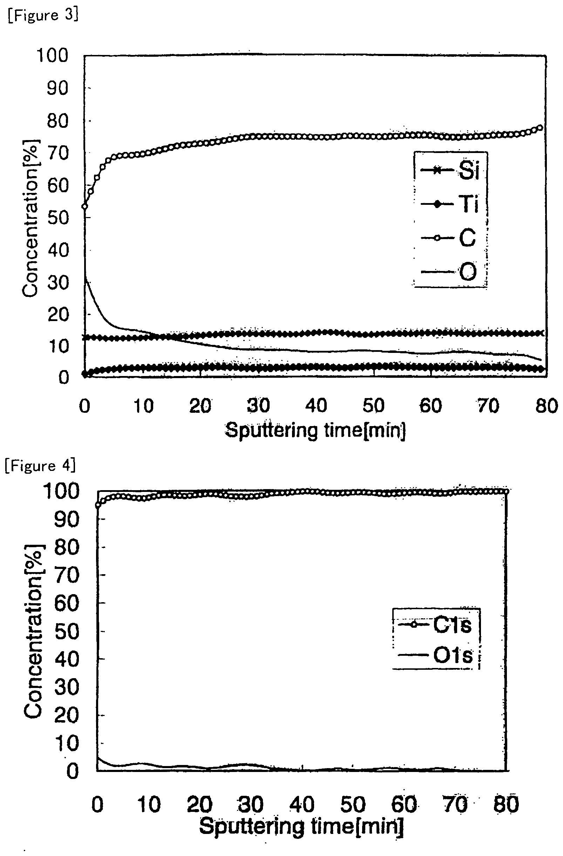

The distribution of each of the carbon, silicon, titanium, and oxygen components of the films of Examples 1, 3, and 4 and Comparative Examples 1 and 2 was measured by ESCA. The results are shown in Figures 1 to 5.

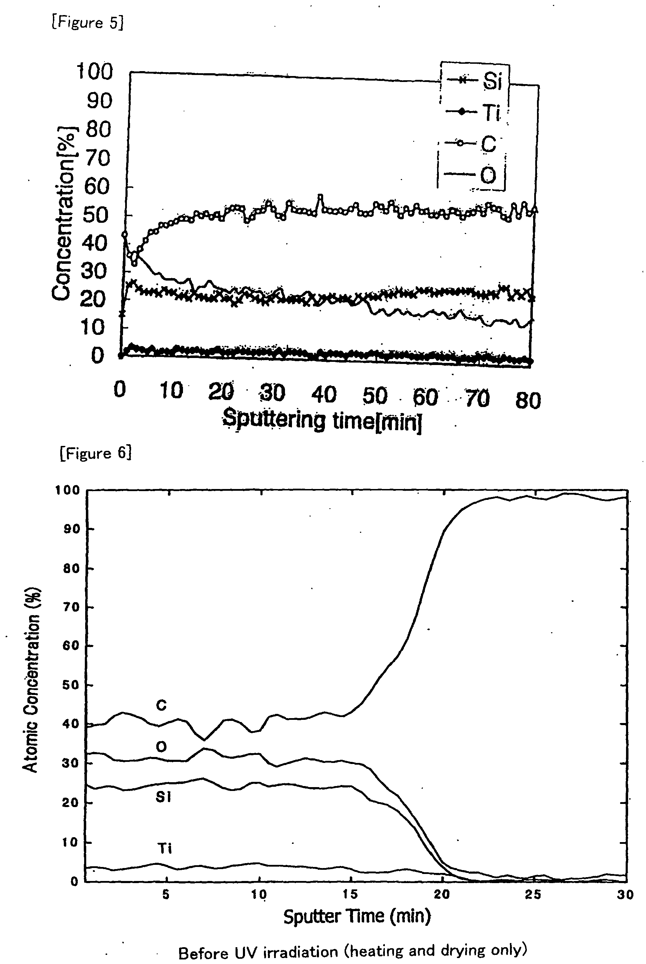

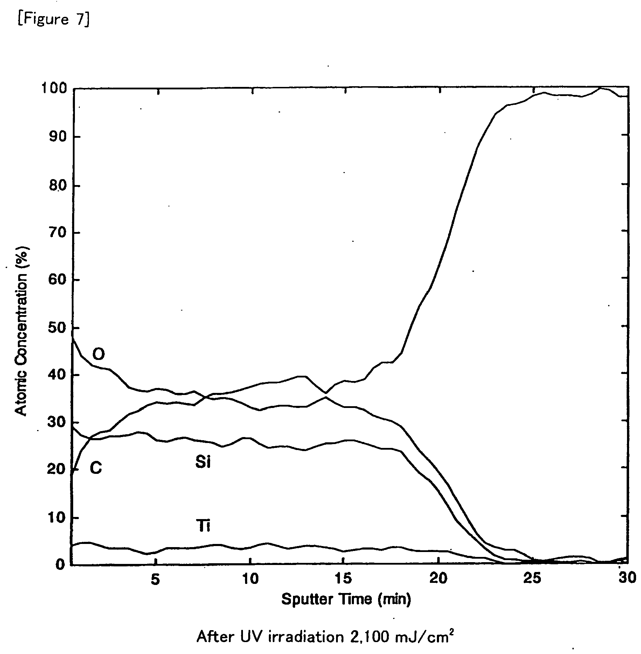

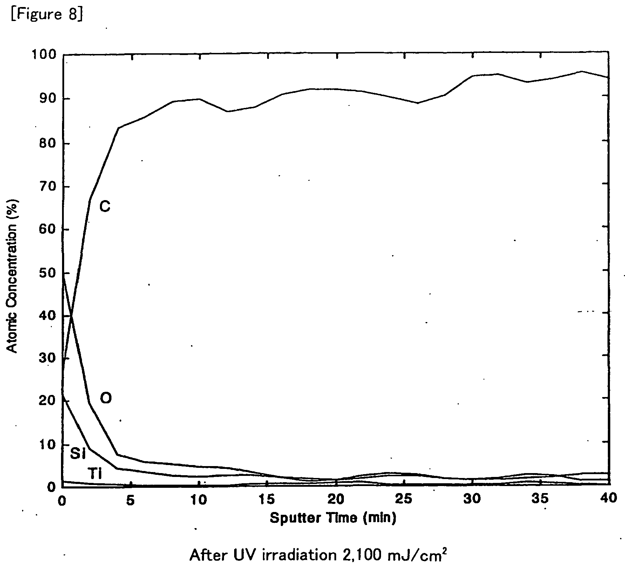

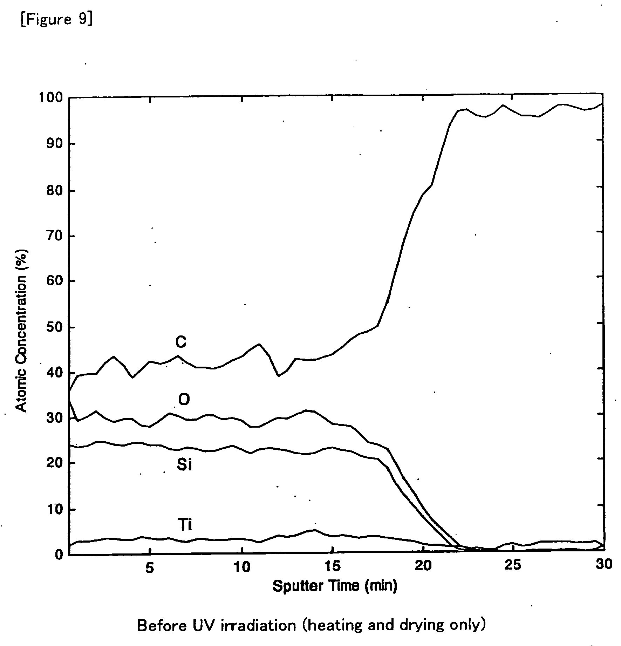

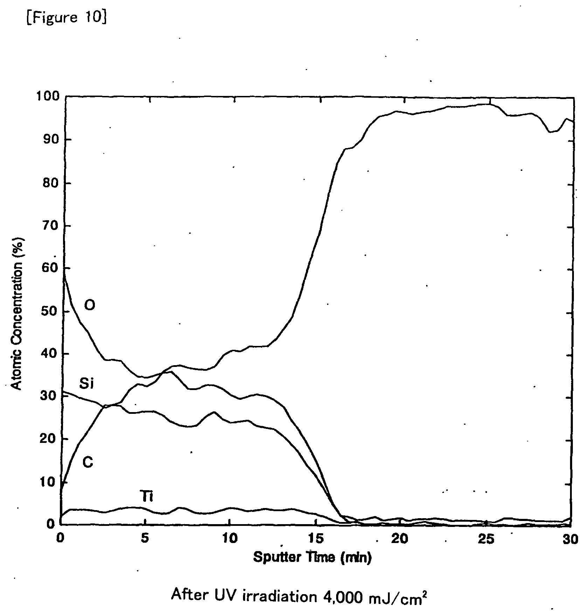

In addition, the distributions of each of the carbon, silicon, titanium, and oxygen components of the films of Example 3', 8', and 9' before and after the coatings were UV-irradiated was measured by ESCA. The results are shown in Figures 6 to 10.

Figures 6 to 10 shows that after UV irradiation, the carbon atom concentration on the film surface decreased and the oxygen atom concentration increased. For Example 8', a high content of the resin component of the film created tucks in the film before UV irradiation, making ESCA measurement impossible.

### 2. Pencil hardness test

A pencil hardness test was performed according to the JIS K 5600-5-4 Pencil Method.

### 3. Adhesion test

An adhesion test was performed according to JIS K 5600. 11 cuts each were made in a coating at 1-mm intervals lengthwise and crosswise to prepare a grid pattern of 100 squares. A piece of Sellotape (trade name) was put on each specimen (ultraviolet-cured film), allowed to closely adhere to the specimen by rubbing the tape against the specimen multiple times with the pulp of a finger, and then pulled off. The adhesion was evaluated based on the number of squares where the coating remained without being removed.

### 4. Abrasion resistance test

An abrasive wheel (CS-10F) was attached to a Taber abrasion tester (Taber's Abrasion Tester, Toyo Tester Kogyo K.K.) and rotated over an ultraviolet-irradiated film with a load of 500 g on the wheel for 500 cycles, and the haze was measured. Abrasion resistance was evaluated with the difference between the haze before the test and that after the test defined as ΔH.

### 5. Moisture resistance test

An ultraviolet-irradiated film was left to stand in a thermohygrostat (LH-30, Nagano Kagaku Kikai Seisakusho K.K.) kept at a temperature of 60°C and a humidity of 95% RH. After 1 week, the changes in the film were observed. ○, no abnormality; ×, cracks and/or clouding found

The test results are shown in Tables 1 to 3.

**[Table 1]**

| | Substrate | Ex. 16 | Ex. 17 | Ex. 18 | Ex. 19 | Ex. 20 | Ex. 21 | Ex. 22 | Ex. 23 |
|---|---|---|---|---|---|---|---|---|---|
| Film thickness (µm) | | 6 | 6 | 6 | 6 | 6 | 6 | 7 | 5 |
| Pencil hardness | SLG | 4H | 7H | 4H | 8H | 8H | 8H | 7H | 8H |
| Adhesion | PC | 100/100 | 100/100 | 100/100 | 100/100 | 100/100 | 100/100 | 100/100 | 100/100 |
| Abrasion resistance | PC | - | - | - | - | - | - | - | - |
| Moisture resistance test | - | - | - | - | - | - | - | - | |

**[Table 2]**

| | Substrate | Ex. 1 | Ex. 2 | Ex. 3 | Ex. 4 | Ex. 5 | Ex. 6 | Ex. 7 | Ex. 8 | Ex. 9 | Com. Ex. 1 | Com. Ex. 2 |
|---|---|---|---|---|---|---|---|---|---|---|---|---|
| Film thickness (µm) | | 4 | 4 | 4 | 8 | 8 | 8 | 8 | 4 | 7 | 8 | 4 |
| Pencil hardness | SLG | 7H | 8H | 5H | 6H | 7H | 5H | 5H | 8H | 5H | 4H | 8H |
| Adhesion | PC | 100/100 | 100/100 | 100/100 | 100/100 | 100/100 | 100/100 | 100/100 | 100/100 | 100/100 | 100/100 | 100/100 |
| Abrasion resistance | PC | 14.5 | 5.8 | 9.6 | 5.5 | 3.4 | 4.9 | 3.7 | 13.2 | 1.5 | 25 | 6.0 |
| Moisture resistance test | - | ○ | ○ | ○ | ○ | ○ | ○ | ○ | ○ | ○ | ○ | × |

**[Table 3]**

| | Substrate | Ex. 24 | Ex. 25 | Ex. 26 | Ex. 27 | Ex. 28 | Com. Ex. 3 | Com. Ex. 4 |
|---|---|---|---|---|---|---|---|---|
| Film thickness (µm) | | 6 | 7 | 6 | 6 | 7 | 7 | 6 |
| Pencil hardness | SLG | 3H | 3H | 8H | 4H | 3H | 2H | H |
| Adhesion | PC | 1,00/100 | 100/100 | 100/100 | 100/100 | 100/100 | 100/100 | 100/100 |
| Abrasion resistance | PC | - | - | - | - | - | - | - |
| Moisture resistance test | - | - | - | - | - | - | - | - |

### 6. Hydrophilicity test

The hydrophilicity on the surface of the thin films of Example 4, Example 8, and Comparative Example 1 was evaluated by contact angle measurement.

Immediately after the surface of each specimen was UV/ozone-cleaned, 5 µL of water was dropped onto the surface from a microsyringe, and after 60 seconds, the contact angle was measured with a contact angle meter (model 360S, Elma Kogaku K.K.).

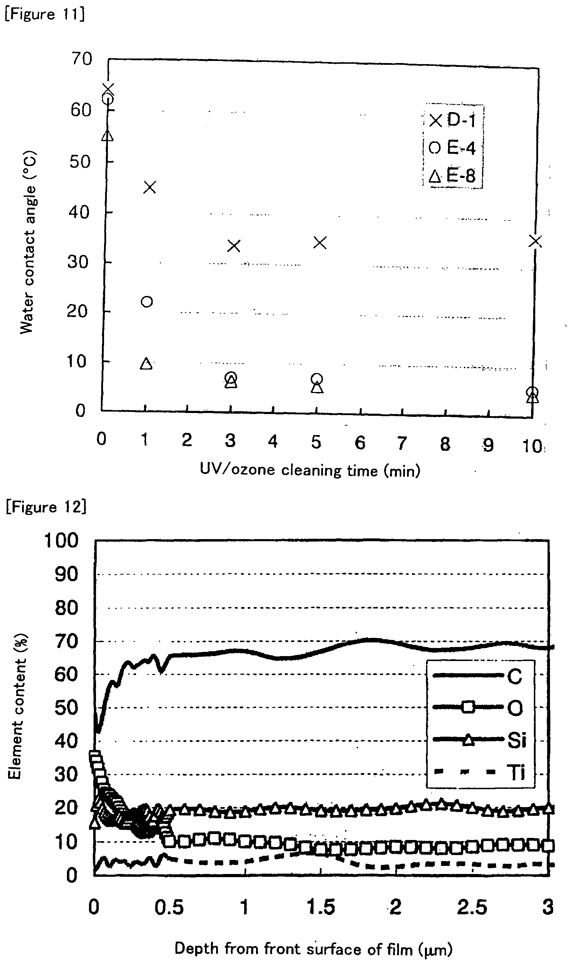

The results are shown in Figure 11.

### 7. Analysis of elements in films

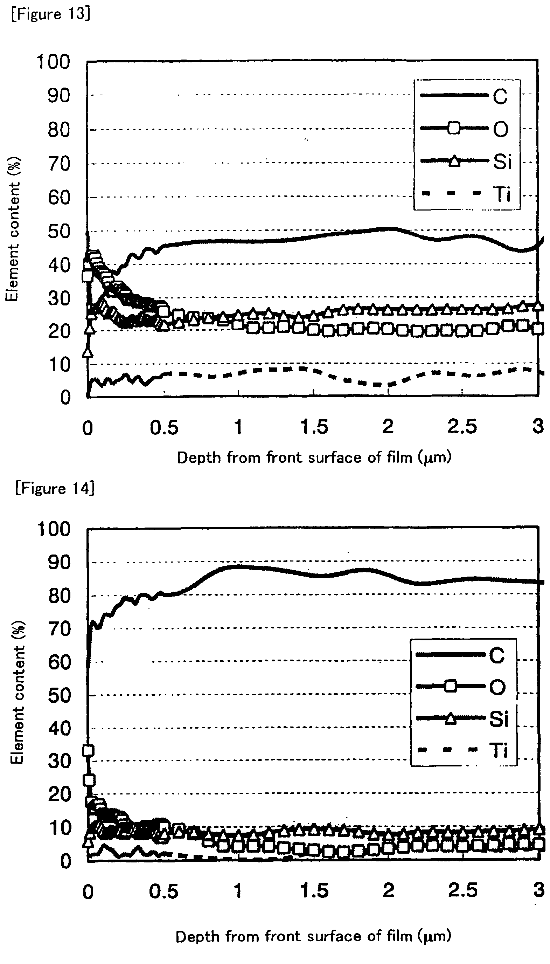

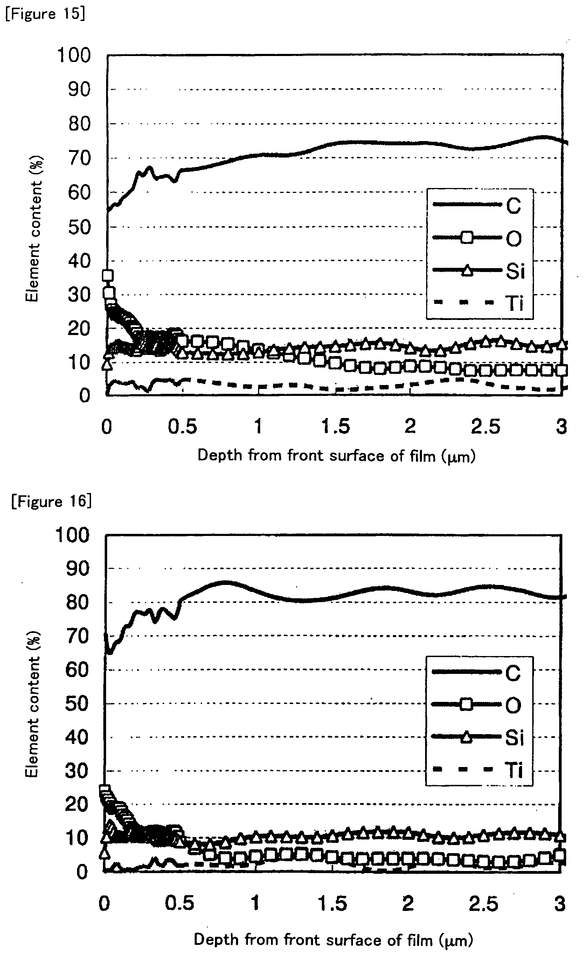

The distributions in the depth direction of elements in the thin films prepared by the thin film formation methods of Example B by using coating-forming compositions [E-10] to [E-15] were analyzed by ESCA (Quantum 2000, ULVAC-PHI, Incorporated). The films were etched by Ar sputtering, and then the content of each of the carbon atom, oxygen atom, silicon atom, and titanium atom in the films was measured with an X-ray photoelectron spectrometer (XPS). The results are shown in Figures 12 to 17.

When the carbon content of a film at the depth where the carbon content reached a maximum (Cₘₐₓ) was defined as 100, surface layer formation was evaluated by using the difference between Cₘₐₓ and the minimum (Cₘᵢₙ), Cₘₐₓ - Cₘᵢₙ. The results are shown in Table 4.

**[Table 4]**

| Coating-forming composition | Ex. 10 | Ex. 11 | Ex. 12 | Ex. 13 | Ex. 14 | Ex. 15 |
|---|---|---|---|---|---|---|
| Cₘₐₓ - Cₘᵢₙ | 60.8 | 50.0 | 66.5 | 72.4 | 78.2 | 70.7 |

### [Reference Example 1]

The photosensitive compounds [A-1], [A-2], and [A-3] obtained above were diluted with ethanol, and the absorbance thereof was measured with a self-recording spectrophotometer (U-4000, Hitachi, Ltd.). The results are shown in Figure 18.

### [Reference Example 2]

The above additive [C-1] for ultraviolet-curable compounds was used to prepare a thin film as in Examples 1 to 8.

The distributions in the depth direction of elements in the thin film prepared were analyzed by ESCA (Quantum 2000, ULVAC-PHI, Incorporated).

The results are shown in Figure 19.

### [Reference Example 3]

Methyltrimethoxysilane, [B-6], (KR-500, Shin-Etsu Chemical Co., Ltd.) was used as the organosilicon compound. [A-1] and [B-6] were mixed together so that the element ratio of Ti to Si becomes 1 to 9, and the mixture was stirred for 12 hours to prepare the solution [C-7]. [C-7] had a solid content of 31.6% by weight.

The above [C-7] was used to prepare a thin film in the same way as in Examples 1 to 8 except for the use of a drying temperature of 130°C and a cumulative ultraviolet dose of 4000 mJ/cm².

The distributions in the depth direction of elements in the coating prepared were measured in the same way as in [Reference Example 2]. The results are shown in Figure 20.

### [Reference Example 4]

The absorbance of the above organic silane compounds [B-1], [B-2], [B-5], and [B-6] was measured in the same way as in [Reference Example 1]. The results are shown in Figure 21.

### [Reference Example 5]

35 g of the above organosilicon compound vinyltrimethoxysilane [B-1] and 20 g of a mixed solvent of 2-butanol/ethyl acetate/ethanol were mixed together. To this solution, 8.5 g of a hydrochloric acid solution (0.1 mol/L) was added as hydrolysis water, and the mixture was stirred for 12 hours to prepare the solution [C-8]. [C-8] had a solid content of 29.4% by weight.

The above [C-8] was used to prepare a thin film in the same way as in [Reference Example 3].

The distributions in the depth direction of elements in the thin film prepared were measured in the same way as in [Reference Example 2]. The results are shown in Figure 22.

### [Reference Example 6]

27 g of the above organosilicon compound 3-methacryloxypropyltrimethoxysilane [B-2] and 25 g of a mixed solvent of 2-butanol/ethyl acetate/ethanol were mixed together. To this solution, 11.8 g of a hydrochloric acid solution (0.1 mol/L) was added as hydrolysis water, and the mixture was stirred for 12 hours to prepare the solution [C-9]. [C-9] had a solid content of 30.6% by weight.

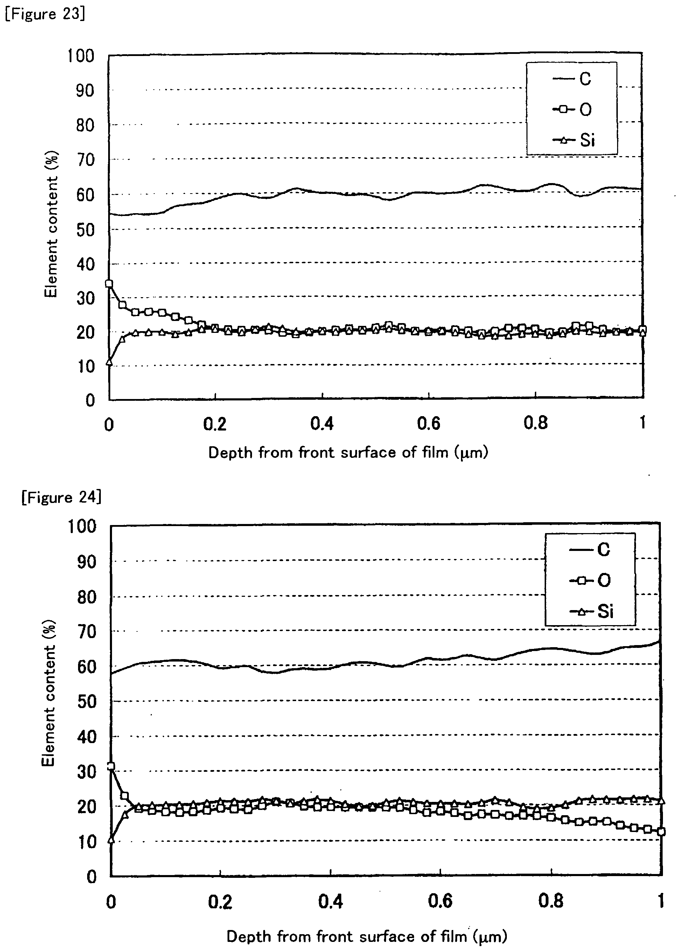

The above [C-9] was used to prepare a thin film and perform measurements in the same way as in [Reference Example 5]. The results are shown in Figure 23.

### [Reference Example 7]

27 g of the above organosilicon compound γ-glycidoxypropyltrimethoxysilane [B-5] and 27 g of a mixed solvent of 2-butanol, ethyl acetate, and ethanol were mixed together. To this solution, 12.4 g of a hydrochloric acid solution (0.1 mol/L) was added as hydrolysis water, and the mixture was stirred for 12 hours to prepare the solution [C-10]. [C-10] had a solid content of 28.8% by weight.

The above [C-10] was used to prepare a thin film and perform measurements in the same way as in [Reference Example 5]. The results are shown in Figure 24.

### Industrial Applicability

The present invention can provide an organic-inorganic composite body having a very high hardness on the surface and an adequate hardness in the interior and on the back surface while having excellent adhesion to a substrate and moisture resistance.

The thin film according to the present invention has a surface having a highly polar, SiO₂ structure, so the film provides excellent interlayer adhesion when various films are laminated. For example, a problem of many commercially available silicon-based cured films is poor adhesion to printing ink due to their water repellency, whereas the thin film according to the present invention has good adhesion to ink. In addition, the thin film according to the present invention also has excellent adhesion to inorganic thin films. For adhesion to inorganic thin films, the thin film also has excellent adhesion to inorganic films which are usually formed on Si wafers or glass substrates because it is difficult to adhere to resins, including photocatalytic films such as TiO₂; electrically conductive thin films such as ITO and SnO₂-based thin films; dielectric and piezoelectric thin films such as Ta₂O₅ and PZT; low-refractive index films such as SiO₂, MgO, and MgF₂; and high-refractive index films such as TiO₂ and ZrO₂, as well as metal films formed by vacuum deposition of, sputtering of, plating with, or other techniques with metals such as Al, Cr, Cu, Ag, and Au.

In addition, the thin film according to the present invention can also be surface-treated by silane coupling treatment, and it is easy to treat the thin film in various ways such as making the surface water-repellent or oil-repellent, and providing plating adhesion by introducing an amino group.

The thin film according to the present invention was produced in two stages: heat curing and ultraviolet curing. In heat treatment, an organosilicon compound undergoes hydrolysis and polycondensation to change into polysiloxane and cure. However, an ultraviolet-curable compound does not easily cure when it is heated, so the thin film is characterized in that the heat-treated film can be molded by selecting an appropriate type of organosilicon compound, an appropriate type of ultraviolet-curable compound, and an appropriate mixing ratio of both compounds.

With the thin film according to the present invention, for example, an uneven pattern can also be formed on the heat-treated film by using a mold. Various patterns can be formed by embossing, nanoimprinting, and the like. Then, ultraviolet irradiation provides the curing of the ultraviolet-curable compound and the conversion of the surface-bound siloxane to SiO₂ with the patterns retained, making it possible to form a surface-mineralized, hard-coated film, a feature of the thin film.

In addition, transfer molding also allows for film formation in a similar way. In this process, a release-treated film (e.g., polyester film) is coated with a composition according to the present invention and heat-treated to form a film. This film is used as a transfer foil before ultraviolet irradiation and transferred to various substrates by the force of heat, pressure, an adhesive, or the like followed by ultraviolet irradiation.

The thin film according to the present invention can also be used as a transfer foil during in-molding. The thin film has excellent printing compatibility (adhesion to ink), so the composition according to the present invention is applied to the film, on which various patterns are then printed. Then, the film is in-molded and irradiated with ultraviolet light, making it possible to transfer the patterns and the hard coating film to the molded body at a time. The thin film is useful for thin film formation by hard coating on molded bodies having a curved surface.

The thin film formed in this way can also be used as a gas-barrier film, an antistatic film, a UV-blocking film, an antireflection film, or the like in addition to a hard coating film. Examples of the application of the hard coating film include automobile glass, headlights, exterior parts, interior parts, electric and electronic parts, and sunroofs; front cases, rear cases, and battery cases for cell phones; eye-glass lenses; optical disks; decorative sheets and films for building materials; TV front panels; CRT covers; and video reflectors.

In addition, the thin film according to the present invention can also be used in molds to produce these products and thus has great potential industrial applicability.

## Claims

1. An organic-inorganic composite body comprising:
a) a condensate of an organosilicon compound represented by Formula (I)
RₙSiX₄₋ₙ ... (I)
(wherein R represents an organic group having a carbon atom directly bonded to Si; X represents a hydroxy group or a hydrolyzable group; n represents 1 or 2, with the proviso that when n is 2, each R may be the same or different, and when (4-n) is 2 or more, each X may be the same or different);
b) at least one photosensitive compound sensitive to light having a wavelength of 350 nm or less selected from the group consisting of metal chelate compounds, metal-organic acid salt compounds, metal compounds having 2 or more hydroxy groups or hydrolyzable groups, hydrolysates thereof, and condensates thereof, and/or a compound derived from the photosensitive compound; and
c) a cured product of an ultraviolet-curable compound selected from the group consisting of polyester(meth)acrylate, polyurethane(meth)acrylate and epoxy poly(meth)acrylate.

2. The organic-inorganic composite body according to claim 1, wherein the content of the organosilicon compound where R in Formula (I) represents a group having a vinyl group, a group having an oxirane ring, a group having -NR'₂ (wherein R' represents a hydrogen atom, an alkyl group, or an aryl group, and each R' may be the same or different), or a group having -N=CR"₂ (wherein R" represents a hydrogen atom or an alkyl group, and each R" may be the same or different) is 20 to 100% by weight with respect to the total weight of the organosilicon compound.

3. The organic-inorganic composite body according to any one of claims 1 and 2, wherein the metal chelate compound has a hydroxy group or a hydrolyzable group.

4. The organic-inorganic composite body according to any one of claims 1 to 3, wherein the metal-organic acid salt compound has a hydroxy group or a hydrolyzable group.

5. The organic-inorganic composite body according to any one of claims 1 to 4, wherein the hydrolysate and/or condensate of the metal compound having 2 or more hydroxy groups or hydrolyzable groups is a product of hydrolysis using 0.5 mol or more of water per 1 mol of metal compound having 2 or more hydroxy groups or hydrolyzable groups.

6. The organic-inorganic composite body according to any one of claims 1 to 5, wherein the hydrolysate and/or condensate of the metal chelate compound is a product of hydrolysis using 5 to 100 mol of water per 1 mol of metal chelate compound.

7. The organic-inorganic composite body according to any one of claims 1 to 6, wherein the hydrolysate and/or condensate of the metal-organic acid salt compound is a product of hydrolysis using 5 to 100 mol of water per 1 mol of metal-organic acid salt compound.

8. The organic-inorganic composite body according to any one of claims 1 to 7, wherein the metal is Ti, Al, Zr, or Sn.

9. An organic-inorganic composite body-forming composition comprising:
a) an organosilicon compound represented by Formula (I)
RₙSiX₄₋ₙ ... (I)
(wherein R represents an organic group having a carbon atom directly bonded to Si; X represents a hydroxy group or a hydrolyzable group; n represents 1 or 2, with the proviso that when n is 2, each R may be the same or different, and when (4-n) is 2 or more, each X may be the same or different), and/or a condensate thereof;
b) at least one photosensitive compound selected from the group consisting of metal chelate compounds, metal-organic salt acid compounds, metal compounds having 2 or more hydroxy groups or hydrolyzable groups, hydrolysates thereof, and condensates thereof;
c) an ultraviolet-curable compound selected from the group consisting of polyester(meth)acrylate, polyurethane(meth)acrylate and epoxy poly(meth)acrylate; and
d) a photopolymerization initiator.

10. The organic-inorganic composite body-forming composition according to claim 9, wherein the content of the organosilicon compound where R in Formula (I) represents a group having a vinyl group, a group having an oxirane ring, a group having -NR'₂ (wherein R' represents a hydrogen atom, an alkyl group, or an aryl group, and each R' may be the same or different), or a group having -N=CR"₂ (wherein R" represents a hydrogen atom or an alkyl group, and each R" may be the same or different) is 20 to 100% by weight with respect to the total weight of the organosilicon compound.

11. The organic-inorganic composite body-forming composition according to any one of claims 9 and 10, wherein the metal is Ti, Al, Zr, or Sn.

12. The organic-inorganic composite body-forming composition according to any one of claims 9 to 11, wherein the content of the ultraviolet-curable compound is 2 to 98% by mass with respect to the total mass of the organosilicon compound and/or condensate thereof, the photosensitive compound, the ultraviolet-curable compound, and the photopolymerization initiator.

## Patentansprüche

1. Organisch-anorganischer Verbundkörper, umfassend:
a) ein Kondensat einer Organosiliciumverbindung der Formel (I)
RₙSiX₄₋ₙ ... (I)
(wobei R für eine organische Gruppe mit einem direkt an Si gebundenen Kohlenstoffatom steht; X für eine Hydroxygruppe oder eine hydrolysierbare Gruppe steht; n für 1 oder 2 steht, mit der Maßgabe, dass dann, wenn n gleich 2 ist, R jeweils gleich oder verschieden sein kann, und dann, wenn (4-n) gleich 2 oder mehr ist, X jeweils gleich oder verschieden sein kann);
b) mindestens eine lichtempfindliche Verbindung, die gegenüber Licht mit einer Wellenlänge von 350 nm oder weniger empfindlich ist, ausgewählt aus der Gruppe bestehend aus Metallchelatverbindungen, metallorganischen Säuresalzverbindungen, Metallverbindungen mit 2 oder mehr Hydroxygruppen oder hydrolysierbaren Gruppen, Hydrolysaten davon und Kondensaten davon, und/oder eine Verbindung, die sich von der lichtempfindlichen Verbindung ableitet; und
c) ein gehärtetes Produkt einer ultravioletthärtbaren Verbindung, ausgewählt aus der Gruppe bestehend aus Polyester(meth)acrylat, Polyurethan(meth)acrylat und Epoxypoly(meth)acrylat.

2. Organisch-anorganischer Verbundkörper nach Anspruch 1, wobei der Gehalt der Organosiliciumverbindung, wobei R in Formel (I) für eine Gruppe mit einer Vinylgruppe, eine Gruppe mit einem Oxiranring, eine Gruppe mit -NR'₂ (wobei R' für ein Wasserstoffatom, eine Alkylgruppe oder eine Arylgruppe steht und R' jeweils gleich oder verschieden sein kann) oder eine Gruppe mit -N=CR"₂ (wobei R" für ein Wasserstoffatom oder eine Alkylgruppe steht und R" jeweils gleich oder verschieden sein kann) steht, 20 bis 100 Gew.-%, bezogen auf das Gesamtgewicht der Organosiliciumverbindung, beträgt.

3. Organisch-anorganischer Verbundkörper nach einem der Ansprüche 1 und 2, wobei die Metallchelatverbindung eine Hydroxygruppe oder eine hydrolysierbare Gruppe aufweist.

4. Organisch-anorganischer Verbundkörper nach einem der Ansprüche 1 bis 3, wobei die metallorganische Säuresalzverbindung eine Hydroxygruppe oder eine hydrolysierbare Gruppe aufweist.

5. Organisch-anorganischer Verbundkörper nach einem der Ansprüche 1 bis 4, wobei es sich bei dem Hydrolysat und/oder Kondensat der Metallverbindung mit 2 oder mehr Hydroxygruppen oder hydrolysierbaren Gruppen um ein Hydrolyseprodukt unter Verwendung von 0,5 mol oder mehr Wasser pro 1 mol Metallverbindung mit 2 oder mehr Hydroxygruppen oder hydrolysierbaren Gruppen handelt.

6. Organisch-anorganischer Verbundkörper nach einem der Ansprüche 1 bis 5, wobei es sich bei dem Hydrolysat und/oder Kondensat der Metallchelatverbindung um ein Hydrolyseprodukt unter Verwendung von 5 bis 100 mol Wasser pro 1 mol Metallchelatverbindung handelt.

7. Organisch-anorganischer Verbundkörper nach einem der Ansprüche 1 bis 6, wobei es sich bei dem Hydrolysat und/oder Kondensat der metallorganischen Säuresalzverbindung um ein Hydrolyseprodukt unter Verwendung von 5 bis 100 mol Wasser pro 1 mol metallorganischer Säuresalzverbindung handelt.

8. Organisch-anorganischer Verbundkörper nach einem der Ansprüche 1 bis 7, wobei es sich bei dem Metall um Ti, Al, Zr oder Sn handelt.

9. Zusammensetzung zur Bildung eines organischanorganischen Verbundkörpers, umfassend:
a) eine Organosiliciumverbindung der Formel (I)
RₙSiX₄₋ₙ ... (I)
(wobei R für eine organische Gruppe mit einem direkt an Si gebundenen Kohlenstoffatom steht; X für eine Hydroxygruppe oder eine hydrolysierbare Gruppe steht; n für 1 oder 2 steht, mit der Maßgabe, dass dann, wenn n gleich 2 ist, R jeweils gleich oder verschieden sein kann, und dann, wenn (4-n) gleich 2 oder mehr ist, X jeweils gleich oder verschieden sein kann) und/oder ein Kondensat davon;
b) mindestens eine lichtempfindliche Verbindung, ausgewählt aus der Gruppe bestehend aus Metallchelatverbindungen, metallorganischen Säuresalzverbindungen, Metallverbindungen mit 2 oder mehr Hydroxygruppen oder hydrolysierbaren Gruppen, Hydrolysaten davon und Kondensaten davon;
c) eine ultravioletthärtbare Verbindung, ausgewählt aus der Gruppe bestehend aus Polyester-(meth)acrylat, Polyurethan(meth)acrylat und Epoxy-poly(meth)acrylat; und
d) einen Photopolymerisationsinitiator.

10. Zusammensetzung zur Bildung eines organischanorganischen Verbundkörpers nach Anspruch 9, wobei der Gehalt der Organosiliciumverbindung, wobei R in Formel (I) für eine Gruppe mit einer Vinylgruppe, eine Gruppe mit einem Oxiranring, eine Gruppe mit -NR'₂ (wobei R' für ein Wasserstoffatom, eine Alkylgruppe oder eine Arylgruppe steht und R' jeweils gleich oder verschieden sein kann) oder eine Gruppe mit -N=CR"₂ (wobei R" für ein Wasserstoffatom oder eine Alkylgruppe steht und R" jeweils gleich oder verschieden sein kann) steht, 20 bis 100 Gew.-%, bezogen auf das Gesamtgewicht der Organosiliciumverbindung, beträgt.

11. Zusammensetzung zur Bildung eines organischanorganischen Verbundkörpers nach einem der Ansprüche 9 und 10, wobei es sich bei dem Metall um Ti, Al, Zr oder Sn handelt.

12. Zusammensetzung zur Bildung eines organischanorganischen Verbundkörpers nach einem der Ansprüche 9 bis 11, wobei der Gehalt der ultravioletthärtbaren Verbindung 2 bis 98 Massen-%, bezogen auf die Gesamtmasse der Organosiliciumverbindung und/oder das Kondensat davon, der lichtempfindlichen Verbindung, der ultravioletthärtbaren Verbindung und des Photopolymerisationsinitiators, beträgt.

## Revendications

1. Corps composite organique-inorganique comprenant :
a) un condensat d'un composé organosilicium représenté par la formule (I)
RₙSiX₄₋ₙ ... (I)
(dans laquelle R représente un groupe organique ayant un atome de carbone directement lié à Si ; X représente un groupe hydroxy ou un groupe hydrolysable ; n représente 1 ou 2, à condition que lorsque n est 2, chaque R puisse être identique ou différent, et lorsque (4-n) est 2 ou plus, chaque X peut être identique ou différent) ;
b) au moins un composé photosensible sensible à la lumière ayant une longueur d'onde de 350 nm ou moins choisi dans le groupe constitué de composés de chélate métallique, composés de sel d'acide organométallique, composés métalliques ayant au moins 2 groupes hydroxy ou groupes hydrolysables, des hydrolysats de ceux-ci, et des condensats de ceux-ci, et/ou un composé dérivé du composé photosensible ; et
c) un produit durci d'un composé durcissable par ultraviolet choisi dans le groupe constitué de (méth)acrylate de polyester, (méth)acrylate de polyuréthane et polyépoxy(méth)acrylate.

2. Corps composite organique-inorganique selon la revendication 1, dans lequel la teneur du composé organosilicium où R dans la formule (I) représente un groupe comportant un groupe vinyle, un groupe comportant un cycle oxirane, un groupe comportant -NR'₂ (dans lequel R' représente un atome d'hydrogène, un groupe alkyle, ou un groupe aryle, et chaque R' peut être identique ou différent), ou un groupe comportant -N=CR"₂ (dans lequel R" représente un atome d'hydrogène ou un groupe alkyle, et chaque R" peut être identique ou différent) est de 20 à 100 % en poids par rapport au poids total du composé organosilicium.

3. Corps composite organique-inorganique selon l'une quelconque des revendications 1 et 2, dans lequel le composé de chélate métallique comporte un groupe hydroxy ou un groupe hydrolysable.

4. Corps composite organique-inorganique selon l'une quelconque des revendications 1 à 3, dans lequel le composé de sel d'acide organométallique comporte un groupe hydroxy ou un groupe hydrolysable.

5. Corps composite organique-inorganique selon l'une quelconque des revendications 1 à 4, dans lequel l'hydrolysat et/ou le condensat du composé métallique ayant au moins 2 groupes hydroxy ou groupes hydrolysables est un produit d'hydrolyse utilisant 0,5 mol ou plus d'eau par 1 mol de composé métallique ayant au moins 2 groupes hydroxy ou groupes hydrolysables.

6. Corps composite organique-inorganique selon l'une quelconque des revendications 1 à 5, dans lequel l'hydrolysat et/ou le condensat du composé de chélate métallique est un produit d'hydrolyse utilisant 5 à 100 mol d'eau par 1 mol de composé de chélate métallique.

7. Corps composite organique-inorganique selon l'une quelconque des revendications 1 à 6, dans lequel l'hydrolysat et/ou le condensat du composé de sel d'acide organométallique est un produit d'hydrolyse utilisant 5 à 100 mol d'eau par 1 mol de composé de sel d'acide organométallique.

8. Corps composite organique-inorganique selon l'une quelconque des revendications 1 à 7, dans lequel le métal est Ti, Al, Zr ou Sn.

9. Composition formant un corps composite organique-inorganique comprenant :
a) un composé organosilicium représenté par la formule (I)
RₙSiX₄₋ₙ ... (I)
(dans laquelle R représente un groupe organique comportant un atome de carbone directement lié à Si ; X représente un groupe hydroxy ou un groupe hydrolysable ; n représente 1 ou 2, à condition que lorsque n est 2, chaque R peut être identique ou différent, et lorsque (4-n) est 2 ou plus, chaque X peut être identique ou différent), et/ou un condensat de celui-ci ;
b) au moins un composé photosensible choisi dans le groupe constitué de composés de chélate métallique, composés de sel d'acide organométallique, composés métalliques comportant au moins 2 groupes hydroxy ou groupes hydrolysables, des hydrolysats de ceux-ci, et des condensats de ceux-ci ;
c) un composé durcissable par ultraviolet choisi dans le groupe constitué de (méth)acrylate de polyester, (méth)acrylate de polyuréthane et polyépoxy(méth)acrylate ; et
d) un initiateur de photopolymérisation.

10. Composition formant un corps composite organique-inorganique selon la revendication 9, dans laquelle la teneur du composé organosilicium où R dans la formule (I) représente un groupe comportant un groupe vinyle, un groupe comportant un cycle oxirane, un groupe comportant -NR'₂ (dans lequel R' représente un atome d'hydrogène, un groupe alkyle, ou un groupe aryle, et chaque R' peut être identique ou différent), ou un groupe comportant -N=CR"₂ (dans lequel R" représente un atome d'hydrogène ou un groupe alkyle, et chaque R" peut être identique ou différent) est de 20 à 100 % en poids par rapport au poids total du composé organosilicium.

11. Composition formant un corps composite organique-inorganique selon l'une quelconque des revendications 9 et 10, dans laquelle le métal est Ti, Al, Zr ou Sn.

12. Composition formant un corps composite organique-inorganique selon l'une quelconque des revendications 9 à 11, dans laquelle la teneur du composé durcissable par ultraviolet est 2 à 98 % en masse par rapport à la masse totale du composé organosilicium et/ou un condensat de celui-ci, du composé photosensible, du composé durcissable par ultraviolet, et de l'initiateur de photopolymérisation.
